(19) Europäisches Patentamt / European Patent Office / Office européen des brevets

(11) EP 1 742 531 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**30.08.2017 Patentblatt 2017/35**

(45) Hinweis auf die Patenterteilung:
**15.10.2014 Patentblatt 2014/42**

(21) Anmeldenummer: **05735975.4**

(22) Anmeldetag: **25.04.2005**

(51) Int Cl.:
***A01N 25/04*** *(2006.01)* ***A01N 43/653*** *(2006.01)*
***A01N 43/36*** *(2006.01)* ***A01N 47/12*** *(2006.01)*
***C08L 97/02*** *(2006.01)* ***C08L 25/06*** *(2006.01)*
***C08L 33/14*** *(2006.01)* ***B27K 3/00*** *(2006.01)*
***B27K 3/15*** *(2006.01)*

(86) Internationale Anmeldenummer:
**PCT/EP2005/004423**

(87) Internationale Veröffentlichungsnummer:
**WO 2005/102044 (03.11.2005 Gazette 2005/44)**

(54) **VERWENDUNG VON WÄSSRIGEN FUNGIZIDEN ZUSAMMENSETZUNGEN ZUR BEKÄMPFUNG VON SCHÄDLICHEN MIKROORGANISMEN**

USE OF AQUEOUS FUNGICIDAL COMPOSITIONS FOR COMBATING HARMFUL MICRO ORGANISMS

UTILISATION DES COMPOSITIONS AQUEUSES FONGICIDES POUR LUTTER CONTRE DES MICRO-ORGANISMES NUISIBLES

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**LV**

(30) Priorität: **26.04.2004 DE 102004020332**

(43) Veröffentlichungstag der Anmeldung:
**17.01.2007 Patentblatt 2007/03**

(73) Patentinhaber: **BASF SE**
**67056 Ludwigshafen am Rhein (DE)**

(72) Erfinder:
- **GÖTTSCHE, Reimer**
  **deceased (DE)**
- **KLEIST, Gunnar**
  **76534 Baden-Baden (DE)**
- **HABICHT, Joerg**
  **76547 Sinzheim (DE)**
- **SCHÖPKE, Holger**
  **69151 Neckargemünd (DE)**
- **AMRHEIN, Patrick**
  **65239 Hochheim (DE)**

(56) Entgegenhaltungen:
**EP-A1- 0 548 726** **EP-A2- 0 201 214**
**EP-A2- 0 286 009** **WO-A-2005/046328**
**JP-A- 2001 323 218** **US-A- 3 212 967**
**US-A- 4 783 335** **US-A- 4 985 064**

- **Y. LIU, P. LAKS, P. HEIDEN: "Controlled release of biocides in solid wood. III. Preparation and characterization of surfactant-free nanoparticles" JOURNAL OF APPLIED POLYMER SCIENCE, Bd. 86, 2002, Seiten 615-621, XP002342288**
- **Y. LIU, P. LAKS, P. HEIDEN: "Controlled release of biocides in solid wood. II. Efficacy against Trametes versicolor and Gloeophyllum trabeum wood decay fungi" JOURNAL OF APPLIED POLYMERIC SCIENCE, Bd. 86, 2002, Seiten 608-614, XP002342289**
- **Y. LIU, P. LAKS, P. HEIDEN: "Controlled release of biocides in solid wood. I. Efficacy agains brown rot wood decay fungus (Gloeophyllum trabeum)" JOURNAL OF APPLIED POLYMER SCIENCE, Bd. 86, 2002, Seiten 596-607, XP002342290**
- **Y. LIU, L. YAN, P. HEIDEN, P. LAKS: "Use of nanoparticles for controlled release of biocides in solid wood" JOURNAL OF APPLIED POLYMER SCIENCE, Bd. 79, 2001, Seiten 458-465, XP002342291**
- **DATABASE WPI Section Ch, Week 198323 Derwent Publications Ltd., London, GB; Class A97, AN 1983-55173K XP002342293 & JP 58 072501 A (TOA GOSEI CHEM IND LTD) 30. April 1983 (1983-04-30)**

EP 1 742 531 B2

- LE ROY BOEHM A L ET AL: "POLYCAPROLACTONE NANOPARTICLES CONTAINING A POORLY SOLUBLE PESTICIDE: FORMULATION AND STABILITY STUDY" RAPRA ABSTRACTS, PERGAMON PRESS LTD. OXFORD, GB, Bd. 37, Nr. 7, Juli 2000 (2000-07), Seite 120, XP000965936 ISSN: 0033-6750
- PAGE-CLISSON M-E ET AL: "Development of ciprofloxacin-loaded nanoparticles: physicochemical study of the drug carrier" JOURNAL OF CONTROLLED RELEASE, ELSEVIER SCIENCE PUBLISHERS B.V., AMSTERDAM, NL, Bd. 56, Nr. 1-3, 4. Dezember 1998 (1998-12-04), Seiten 23-32, XP004153916 ISSN: 0168-3659
- Wikipedia "Carbendazim" (30. Mai 2015)
- Wikipedia "Bis(tributylzinn)oxid" (04. Januar 2015)
- Wikipedia "2-Hydroxyethylmethacrylat" (03. November 2015)
- CAS-Registry "Skane M-8" (2015)
- Polymer Products Aldrich "Polymer Properties - Glass transition temperature" (2015)
- Wikipedia "Chlorthalonil" (05. August 2014)

## Beschreibung

Die vorliegende Erfindung betrifft ein Verfahren zum Schutz von Holz gegen den Befall mit schädlichen Mikroorganismen, insbesondere Schadpilzen, speziell solchen Schadpilzen, die Holz bzw. Cellulose schädigen können, wobei das Verfahren die Behandlung von Holz durch Tränken mit einer wässrigen Wirkstoffzusammensetzung unter Zuhilfenahme von Druckunterschieden umfasst.

Es ist bekannt, dass Holz und auch andere cellulosehaltige Materialien von Mikroorganismen und insbesondere Pilzen (im Folgenden Schadpilze) angegriffen und im Extremfall zerstört werden können, wenn sie Umweltbedingungen ausgesetzt sind, die das Wachstum und die Entwicklung solcher Mikroorganismen fördern. Auch wenn einige Holzarten gegenüber einem derartigen Befall eine natürliche Resistenz besitzen, sind andere, insbesondere Weichholzarten, gegenüber einem Befall äußerst anfällig (siehe auch EN 350, Teil 2). Aus diesem Grund wird das Holz häufig mit Holzschutzmitteln behandelt.

Klassische Holzschutzmittel auf Basis von Teerölen, wie Carbolineum, sind auf Grund ihres Eigengeruchs und ihrer potenziellen Karzinogenität wenig attraktiv. Verschiedentlich wurden organische Fungizide als Holzschutzmittel vorgeschlagen (siehe E. H. Pommer in Ullmann's Encyclopedia of Industrial Chemistry on CD Rom, 5. Auflage, 1997, Wiley VCH Weinheim, Wood preservation, Kapitel 2.3.1). Da es sich bei den fungiziden Wirkstoffen üblicherweise um in Wasser unlösliche Substanzen handelt, werden diese zu Zwecken des Holzschutzes häufig als Lösungen in organischen Lösungsmitteln formuliert. Der Einsatz von Lösungsmitteln ist jedoch mit zusätzlichen Kosten verbunden und zudem aus arbeitshygienischen Gründen sowie aus Gründen des Umweltschutzes nicht erwünscht.

Im Pflanzenschutz werden fungizide Wirkstoffe, die in Wasser nur eine geringe Löslichkeit aufweisen, häufig in Form wässriger Suspensionen oder Emulsionen formuliert. Während Emulsionen üblicherweise noch organische Lösungsmittel enthalten, werden Suspensionen üblicherweise lösungsmittelfrei formuliert. In diesen Suspensionen liegt der Wirkstoff in Form feiner Partikel mit Teilchengrößen im $\mu$m-Bereich vor. Behandelt man nun Holz mit einer solchen Suspension, verbleibt der Wirkstoff auf der Oberfläche des Holzes, da er auf Grund der Teilchengröße nicht in die Poren des Holzes eindringen kann. Dies ist jedoch erforderlich, um einen wirksamen Schutz des Holzes zu erreichen. Zudem wird der Wirkstoff leicht von der Oberfläche durch Witterungseinflüsse abgewaschen.

Verschiedentlich wurden als Holzschutz auch fungizide Lasuren vorgeschlagen. Hierbei handelt es sich um wässrige Anstrichsysteme auf Basis wässriger Polymerlatices, die den Wirkstoff in suspendierter Form enthalten. Auch hier ist der Schutz des Holzes nicht ausreichend, da die Wirkstoffe nicht in das Holz eindringen, sondern auf der Oberfläche des Holzes verbleiben.

WO 2005/046328 beschreibt nanopartikuläre Formulierungen enthaltend einen Wirkstoff und ein Copolymer, das aus sulfonsäuregruppentragenden Monomeren und weiteren olefinisch ungesättigten Verbindungen aufgebaut ist. Außerdem werden Verwendungen solcher Formulierungen in Form wässriger Dispersionen zur Bekämpfung von tierischen Schädlingen, von Schadpilzen oder unerwünschtem Pflanzenwachstum beschrieben.

Die Dokumente Y. Liu, P. Laks, P. Heiden, Journal of Applied Polymer Science 2002, 86, 615-621; Y. Liu, P. Laks, P. Heiden, Journal of Applied Polymer Science 2002, 86, 608-614; Y. Liu, P. Laks, P. Heiden, Journal of Applied Polymer Science 2002, 86, 596-607; und Y. Liu, L. Yan, P. Heiden, P. Laks, Journal of Applied Polymer Science 2001, 79, 458-465, beschreiben fungizidhaltige polymere Nanopartikel, wässrige Suspensionen solcher Nanopartikel sowie deren Verwendung als Holzschutzmittel. Bei den Polymerkomponenten der Nanopartikel handelt es sich um Polyvinylpyridin (PVP), um Copolymere von Vinylpyridin (VP) und Styrol, die aus mindestens 70 Gew.-% VP gebildet sind, oder um Mischungen von PVP und hochverzweigten Polyestern.

Verschiedentlich wurde vorgeschlagen, wasserunlösliche fungizide Wirkstoffe in Form wässriger Mikro- bzw. Nanoemulsionen zu formulieren (siehe z. B. WO 02/082900, WO 02/45507 und WO 99/65301). Im Gegensatz zu konventionellen, üblicherweise milchig-trüben Makroemulsionen, in denen die dispergierte Phase Teilchengrößen deutlich oberhalb 1 $\mu$m aufweist, liegen die Wirkstoffe in den klaren bis opaken Mikro- bzw. Nanoemulsionen in feinverteilter Form mit Teilchengrößen deutlich unterhalb 1000 nm bis hin zu 10 nm oder darunter vor [siehe hierzu D.J. Shaw, Introduction to Colloid and Surface Chemistry, Butterworths, London 1986, S.273]. Allerdings benötigt man zur Herstellung derartiger Mikro- bzw. Nanoemulsionen vergleichsweise große Mengen an Emulgator und an organischen Lösungsmitteln. Durch den hohen Anteil an Emulgator besteht die Gefahr, dass der Wirkstoff bei Einwirkung von Wasser aus dem Holz oder dem behandelten cellulosehaltigen Material ausgewaschen wird. Lösungsmittel wiederum sind aus arbeitshygienischen Gründen und Kostengründen unerwünscht. Zudem wird durch den Einsatz der Emulgatoren das Wasseraufnahmevermögen des Holzes bei Befeuchtung und die Ausgleichsfeuchte bei Lagerung im feuchten Klima gegenüber unbehandeltem Holz erhöht, was das Holz anfälliger für den Befall mit Schadpilzen macht. Ein weiteres Problem derartiger Mikroemulsionen ist ihre Instabilität gegenüber Entmischung. Eine derartige Entmischung kann beispielsweise auftreten, wenn die Mikroemulsion auf Grund einer hohen Affinität des Emulgators zum Holz an Emulgator verarmt oder eine Verarmung an Lösungsmittel auftritt, was bei der Druckimprägnierung leicht passieren kann.

Der vorliegenden Erfindung liegt daher die Aufgabe zu Grunde, ein Verfahren zum Schutz von Holz gegen den Befall mit Mikroorganismen bereitzustellen, das die Behandlung mit einer wässrigen, fungizid wirksamen Zusammensetzung von fungiziden Wirkstoffen mit geringer Wasserlöslichkeit, d.h. einer Löslichkeit in Wasser von weniger als 5 g/l, insbesondere weniger als 1g/l bei 25 °C/1013 mbar, umfasst. Die Zusammensetzung sollte sich in vorteilhafter Weise für den Schutz von Holz eignen und insbesondere nur geringe Mengen oder keine flüchtigen organischen Verbindungen wie organische Lösungsmittel enthalten. Zudem sollte der Wirkstoff aus den behandelten Materialien auch bei Einwirkung von Wasser nicht oder nicht in nennenswertem Umfang ausgewaschen werden. Ferner sollten die wässrigen Wirkstoffzusammensetzungen eine bessere Stabilität aufweisen als konventionelle Suspensionen oder Mikroemulsionen.

Es wurde überraschenderweise gefunden, dass diese Aufgabe durch Behandeln von Holz mit einer wässrigen Wirkstoffzusammensetzung gelöst wird, in welcher der in Wasser nicht oder nur geringfügig lösliche, fungizide Wirkstoff in den Polymerteilchen eines feinteiligen, wasserunlöslichen Polymerisats vorliegt, dessen Polymerteilchen eine mittlere Teilchengröße von nicht mehr als 300 nm aufweisen und worin das Polymerisat aus wenigstens 60 Gew.-%, bezogen auf die Gesamtmenge der Monomere M, wenigstens eines neutralen, monoethylenisch ungesättigten Monomeren M1 mit einer Wasserlöslichkeit von nicht mehr als 30 g/l bei 25 °C, die ausgewählt sind unter Styrol und Estern monoethylenisch ungesättigter Mono- und Dicarbonsäuren mit 3 bis 8 C-Atomen mit $C_1$-$C_{10}$-Alkanolen oder mit $C_5$-$C_8$-Cycloaikanolen, und bis zu 40 Gew.-%, bezogen auf die Gesamtmenge der Monomere M, eines oder mehrerer, von den Monomeren M1 verschiedener, ethylenisch ungesättigter Monomere M2 aufgebaut ist, wobei das Polymerisat erhältlich ist durch radikalische wässrige Emulsionspolymerisation einer Öl-in-Wasser-Emulsion der Monomere M, wobei die Monomertröpfchen der zu polymerisierenden Öl-in-Wasser-Emulsion den fungiziden Wirkstoff in gelöster Form enthalten, und wobei die Behandlung durch Tränken des Holzes mit der wässrigen Wirkstoffzusammensetzung oder einer wässrigen Verdünnung der wässrigen Wirkstoffzusammensetzung mit Hilfe von Druckunterschieden erfolgt.

Somit betrifft die vorliegende Erfindung ein Verfahren zum Schutz von Holz gegen den Befall mit Mikroorganismen, umfassend die Behandlung von Holz mit einer wässrigen Wirkstoffzusammensetzung, enthaltend:

a) wenigstens einen fungiziden organischen Wirkstoff mit einer Wasserlöslichkeit von nicht mehr als 5 g/l bei 25 °C/1013 mbar und

b) ein feinteiliges Polymerisat mit einer mittleren Teilchengröße, bestimmt durch dynamische Lichtstreuung, von nicht mehr als 300 nm, worin die Polymerteilchen den Wirkstoff enthalten,

wobei das Polymerisat aus ethylenisch ungesättigten Monomere M aufgebaut ist, umfassend:

- wenigstens 60 Gew.-%, bezogen auf die Gesamtmenge der Monomere M, wenigstens eines neutralen, monoethylenisch ungesättigten Monomeren M1 mit einer Wasserlöslichkeit von nicht mehr als 30 g/l bei 25 °C, die ausgewählt sind unter Styrol und Estern monoethylenisch ungesättigter Mono- und Dicarbonsäuren mit 3 bis 8 C-Atomen mit $C_1$-$C_{10}$-Alkanolen oder mit $C_5$-$C_8$-Cycloalkanolen, und
- bis zu 40 Gew.-%, bezogen auf die Gesamtmenge der Monomere M, eines oder mehrerer, von den Monomeren M1 verschiedener ethylenisch ungesättigter Monomere M2,

wobei das Polymerisat erhältlich ist durch radikalische wässrige Emulsionspolymerisation einer Öl-in-Wasser-Emulsion der Monomere M, wobei die Monomertröpfchen der zu polymerisierenden Öl-in-Wasser-Emulsion den fungiziden Wirkstoff in gelöster Form enthalten, und
wobei die Behandlung durch Tränken des Holzes mit der wässrigen Wirkstoffzusammensetzung oder einer wässrigen Verdünnung der wässrigen Wirkstoffzusammensetzung mit Hilfe von Druckunterschieden erfolgt.

Bei den in dem erfindungsgemäßen Verfahren eingesetzten Zusammensetzungen handelt es sich um stabile wässrige Zubereitungen von in Wasser nicht oder nur geringfügig löslichen, fungiziden Wirkstoffen, die grundsätzlich für alle Anwendungen geeignet sind, bei denen man einen wirksamen Schutz von Holz gegen den Befall mit Mikroorganismen, speziell Schadpilzen, erreichen will. Überraschenderweise ist trotz des Einbaus des fungiziden Wirkstoffs in eine polymere Matrix die für einen wirksamen Schutz erforderliche Aufwandmenge an Wirkstoff nicht höher und in einigen Fällen sogar geringer als bei Einsatz konventioneller wässriger Wirkstoffzubereitungen.

Die hier angegebenen Teilchengrößen des feinteiligen Polymerisats sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429. Die mittlere Teilchengröße liegt vorzugsweise im Bereich von 10 bis 250 nm, insbesondere im Bereich von 20 bis 200 nm, besonders bevorzugt im Bereich von 30 bis 150 nm und ganz besonders bevorzugt im Bereich von 30 bis 100 nm.

Erfindungsgemäß ist das Polymerisat zu wenigstens 60 Gew.-%, bezogen auf die Gesamtmenge der das Polymerisat bildenden Monomere M, vorzugsweise zu 60 bis 99,5 Gew.-% und besonders bevorzugt 70 bis 99 Gew.-% aus neutralen, monoethylenisch ungesättigten Monomeren M1 mit einer Wasserlöslichkeit von nicht mehr als 30 g/l

bei 25 °C/1013 mbar aufgebaut. Insbesondere liegt die Wasserlöslichkeit der Monomere M1 unter diesen Bedingungen bei 0,1 bis 20 g/l. Die Monomere M1 sind ausgewählt unter Styrol und Estern monoethylenisch ungesättigter Mono- und Dicarbonsäuren mit 3 bis 8 und insbesondere 3 oder 4 C-Atomen mit $C_1$-$C_{10}$-Alkanolen oder mit $C_5$-$C_8$-Cycloalkanolen, insbesondere Estern der Acrylsäure, der Methacrylsäure, der Crotonsäure, Diestern der Maleinsäure, der Fumarsäure und der Itaconsäure und besonders bevorzugt Estern der Acrylsäure mit $C_2$-$C_{10}$-Alkanolen (= $C_2$-$C_{10}$-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat und Estern der Methacrylsäure mit $C_1$-$C_{10}$-Alkanolen wie Methylmethacrylat, Ethylmethacrylat, n-Butylmethacrylat, Isobutylmethacrylat, tert.-Butylmethacrylat, n-Hexylmethacrylat und dergleichen. Bevorzugte Monomere M1 sind Styrol, $C_2$-$C_{10}$-Alkylacrylate, insbesondere $C_2$-$C_8$-Alkylacrylate, und $C_1$-$C_{10}$-Alkylmethacrylate.

Vorteilhafterweise umfassen die das Polymerisat bildenden ethylenisch ungesättigten Monomere M außerdem wenigstens 0,5 bis 40 Gew.-%, insbesondere 1 bis 30 Gew.-% wenigstens eines von den Monomeren M1 verschiedenen ethylenisch ungesättigten Monomer M2.

Zu den Monomeren M2 zählen insbesondere monoethylenisch ungesättigte Monomere M2a, die wenigstens eine Säuregruppe oder wenigstens eine anionische Gruppen aufweisen, insbesondere Monomere M2a, die eine Sulfonsäuregruppe, eine Phosphonsäuregruppe oder ein oder zwei Carbonsäuregruppen aufweisen, sowie die Salze der Monomere M2a, insbesondere die Alkalimetallsalze, z. B. die Natrium- oder Kaliumsalze sowie die Ammoniumsalze. Hierzu zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, ethylenisch ungesättigte Phosphonsäuren, wie Vinylphosphonsäure und Vinylphosphonsäuredimethylester und deren Salze und $\alpha,\beta$-ethylenisch ungesättigte $C_3$-$C_8$-Mono- und $C_4$-$C_8$-Dicarbonsäuren, insbesondere Acrylsäure, Methacrylsäure, Crotonsäure, Maleinsäure, Fumarsäure und Itaconsäure. Der Anteil der Monomere M2a wird häufig nicht mehr als 35 Gew.-%, vorzugsweise nicht mehr als 20 Gew.-%, z. B. 0,1 bis 20 Gew.-% und insbesondere 0,5 bis 15 Gew.-%, bezogen auf die Gesamtmenge der Monomere M, ausmachen.

Zu den Monomeren M2 zählen weiterhin die monoethylenisch ungesättigten, neutralen Monomere M2b, die eine Wasserlöslichkeit von wenigstens 50 g/l bei 25 °C und insbesondere wenigstens 100 g/l bei 25 °C aufweisen. Beispiele hierfür sind die Amide der vorgenannten ethylenisch ungesättigten Carbonsäuren, insbesondere Acrylamid und Methacrylamid, ethylenisch ungesättigte Nitrile wie Methacrylnitril und Acrylnitril, Hydroxyalkylester der vorgenannten $\alpha,\beta$-ethylenisch ungesättigten $C_3$-$C_8$-Monocarbonsäuren und der $C_4$-$C_8$-Dicarbonsäuren, insbesondere Hydroxyethylacrylat, Hydroxyethylmethacrylat, 2- und 3-Hydroxypropylacrylat, 2- und 3-Hydroxypropylmethacrylat, Ester der vorstehend genannten monoethylenisch ungesättigten Mono- und Dicarbonsäuren mit $C_2$-$C_4$-Polyalkylenglykolen, insbesondere die Ester dieser Carbonsäuren mit Polyethylenglykol oder Alkyl-Polyethylenglykolen, wobei der (Alkyl)polyethylenglykol-Rest üblicherweise ein Molekulargewicht im Bereich von 100 bis 3000 aufweist. Zu den Monomeren M2b zählen weiterhin N-Vinylamide wie N-Vinylformamid, N-Vinylpyrrolidon, N-Vinylimidazol und N-Vinylcaprolactam. Der Anteil der Monomere M2b wird vorzugsweise nicht mehr als 20 Gew.-%, und insbesondere nicht mehr als 10 Gew.- %, z. B. 0,1 bis 10 und insbesondere 0,5 bis 5 Gew.-%, bezogen auf die Gesamtmenge der Monomere M, ausmachen.

Zu den Monomeren M2 zählen weiterhin monoethylenisch ungesättigte Monomere M2c, die wenigstens eine kationische Gruppe und/oder wenigstens eine im Wässrigen protonierbare Gruppe aufweisen. Zu den Monomeren M2c zählen insbesondere solche, die eine protonierbare Aminogruppe, eine quartäre Ammoniumgruppe, eine protonierbare Iminogruppe oder eine quaternisierte Iminogruppe aufweisen. Beispiele für Monomere mit einer protonierbaren Iminogruppe sind N-Vinylimidazol und Vinylpyridine. Beispiele für Monomere mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Methosulfat. Unter den Monomeren M2c werden insbesondere die Monomere der allgemeinen Formel I bevorzugt

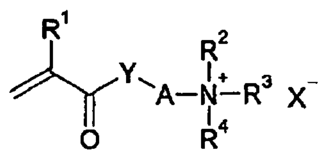

(I)

worin

$R^1$ Wasserstoff oder $C_1$-$C_4$-Alkyl, insbesondere Wasserstoff oder Methyl,
$R^2$, $R^3$ unabhängig voneinander $C_1$-$C_4$-Alkyl, insbesondere Methyl, und
$R^4$ Wasserstoff oder $C_1$-$C_4$-Alkyl, insbesondere Wasserstoff oder Methyl bedeuten,
Y für Sauerstoff, NH oder $NR^5$ mit $R^5$ = $C_1$-$C_4$-Alkyl steht,
A für $C_2$-$C_8$-Alkylen, z. B. 1,2-Ethandiyl, 1,2- oder 1,3-Propandiyl, 1,4-Butandiyl oder 2-Methyl-1,2-propandiyl,

das gegebenenfalls durch 1, 2 oder 3 nicht benachbarte Sauerstoffatome unterbrochen ist, steht und

$X^-$ für ein Anionenäquivalent, z. B. für $Cl^-$, $HSO_4^-$, ½ $SO_4^{2-}$ oder $CH_3OSO_3^-$ etc. steht,

und für $R^4$ = H den freien Basen der Monomere der Formel I.

Beispiele für derartige Monomere sind 2-(N,N-Dimethylamino)ethylacrylat, 2-(N,N-Dimethylamino)ethylmethacrylat, 2-(N,N-Dimethylamino)ethylacrylamid, 3-(N,N-Dimethylamino)propylacrylamid, 3-(N,N-Dimethylamino)propylmethacrylamid, 2-(N,N-Dimethylamino)ethylmethacrylamid, 2-(N,N,N-Trimethylammonium)ethylacrylat-Chlorid, 2-(N,N,N-Trimethylammonium)ethylmethacrylat-Chlorid, 2-(N,N,N-Trimethylammonium)ethylmethacrylamid-Chlorid, 3-(N,N,N-Trimethylammonium)propylacrylamid-Chlorid, 3-(N,N,N-Trimethylammonium)propylmethacrylamid-Chlorid, 2-(N,N,N-Trimethylammonium)ethylacrylamid-Chlorid, sowie die entsprechenden Methosulfate und Sulfate.

In einer bevorzugten Ausführungsform umfassen die das Polymerisat bildenden Monomere M wenigstens ein Monomer M2c. Der Anteil der Monomere M2c beträgt dann vorteilhafterweise 0,1 bis 20 Gew.-%, insbesondere 0,5 bis 10 Gew.-%, und besonders bevorzugt 1 bis 7 Gew.-%, bezogen auf die Gesamtmenge der Monomere M.

In einer besonders bevorzugten Ausführungsform der Erfindung weist das Polymer eine kationische Nettoladung auf, d. h. der molare Anteil der Monomere M2c überwiegt den molaren Anteil der Monomere M2a im Polymerisat und beträgt vorzugsweise 110 mol-% insbesondere wenigstens 120 mol-% und besonders bevorzugt wenigstens 150 mol-%, bezogen auf die Monomere M2a.

Zu den Monomeren M2 zählen weiterhin alle Monomere, die üblicherweise in einer Emulsionspolymerisation eingesetzt werden können. Der Anteil an Monomeren, die zwei oder mehrere, nichtkonjugierte ethylenisch ungesättigte Doppelbindungen aufweisen, macht jedoch üblicherweise nicht mehr als 5 Gew.-%, insbesondere nicht mehr als 2 Gew.-%, z. B. 0,01 bis 2 Gew.-% und insbesondere 0,05 bis 1,5 Gew.-%, bezogen auf die Gesamtmonomermenge aus.

Weiterhin hat es sich als vorteilhaft erwiesen, wenn das Polymerisat, welches in den im erfindungsgemäßen Verfahren eingesetzten Zusammensetzungen enthalten ist, eine Glasübergangstemperatur $T_g$ von wenigstens 10 °C, vorzugsweise wenigstens 20 °C und insbesondere wenigstens 30 °C aufweist. Insbesondere wird die Glasübergangstemperatur einen Wert von 180 °C, und besonders bevorzugt 130 °C nicht überschreiten. Sofern die erfindungsgemäße Wirkstoffzusammensetzung mehrere Polymerisate mit unterschiedliche Glasübergangstemperatur - sei es in Form von Stufen- bzw. Kern-Schalepolymerisaten, oder in Form von Blends unterschiedlicher Polymerisate - umfasst, liegt der Anteil an Polymerisaten mit einer Glasübergangstemperatur von wenigstens 10 °C, vorzugsweise wenigstens 20 °C und insbesondere wenigstens 30 °C bei wenigstens 40 Gew.-%.

Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g^1} + \frac{X^2}{T_g^2} + \cdots \frac{X^n}{T_g^n}$$

wobei $X^1$, $X^2$, ..., $X^n$ die Massenbrüche der Monomeren 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmanns's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Als Wirkstoffe kommen grundsätzlich alle organischen Substanzen mit geringer Wasserlöslichkeit in Betracht, die das Wachstum oder die Vermehrung von Schadpilzen hemmen oder diese abtöten. Ihre Wasserlöslichkeit bei 25 °C/1013 mbar beträgt in der Regel nicht mehr als 5 g/l häufig nicht mehr als 3 g/l und insbesondere nicht mehr als 1 g/l, z. B. 0,001 g/l bis 1 g/l, insbesondere 0,002 bis 0,5 g/l bei 25 °C/1013 mbar.

Beispiele für geeignete Wirkstoffe sind die im Compendium of Pesticide Common Names: http://www.hclrss.demon.co.uk/class-fungicides.html (Index of common names) als Fungizide aufgeführten Verbindungen. Hierzu zählen beispielsweise:

- Acylalanine wie Benalaxyl, Metalaxyl, Ofurace, Oxadixyl;
- Morpholinverbindungen wie Aldimorph, Dodine, Dodemorph, Fenpropimorph, Fenpropidin, Guazatine, Iminoctadine, Spiroxamin, Tridemorph;
- Anilinopyrimidine wie Pyrimethanil, Mepanipyrim oder Cyrodinyl;

- Antibiotika wie Cycloheximid, Griseofulvin, Kasugamycin, Natamycin, Polyoxin oder Streptomycin;
- Azole wie Azaconazol, Bitertanol, Bromoconazol, Cyproconazol, Dichlobutrazol, Difenoconazole, Dinitroconazol, Epoxiconazol, Fenbuconazol, Fluquiconazol, Flusilazol, Flutriafol, Ketoconazol, Hexaconazol, Imazalil, Metconazol, Myclobutanil, Penconazol, Propiconazol, Prochloraz, Prothioconazol, Tebuconazol, Tetraconazol, Triadimefon, Triadimenol, Triflumizol, Triticonazol;
- Dicarboximide wie Iprodion, Myclozolin, Procymidon, Vinclozolin;
- Dithiocarbamate wie Ferbam, Nabam, Maneb, Mancozeb, Metam, Metiram, Propineb, Polycarbamat, Thiram, Ziram, Zineb;
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine;
- Nitrophenylderivate, wie Binapacryl, Dinocap, Dinobuton, Nitrophthalisopropyl;
- Phenylpyrrole wie Fenpiclonil oder Fludioxonil;
- Strobilurine wie Dimoxystrobin, Fluoxastrobin, Kresoxim-methyl, Metominostrobin, Orysastrobin, Picoxystrobin, Pyraclostrobin und Trifloxystrobin;
- Sonstige Fungizide wie Acibenzolar-S-methyl, Benzoylbenzoat, Dodecylguanidin-Hydrochlorid, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid;
- Sulfensäurederivate wie Captafol, Captan, Dichlofluanid, Folpet, Tolylfluanid;
- Zimtsäureamide und Analoge wie Dimethomorph, Flumetover oder Flumorph;

Hierzu zählen weiterhin:

- Iodverbindungen Düodmethyl-p-tolylsulfon, 3-Iod-2-propinylalkohol, 4-Chlorphenyl-3-iodpropargylformal, 3-Brom-2,3-diiod-3-propenylethylcarbonat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinylphenylcarbamat, O-1-(6-Iod-3-oxohex-5-inyl)butylcarbamat, O-1-(6-Iod-3-oxohex-5-inyl)phenylcarbamat, Napcocide;
- Phenolderivate wie Tribromphenol, Tetrachlorphenol, 3-Methyl-4-chlorphenol, Dichlorophen, O-Phenylphenol, m-Phenylphenol, 2-Benzyl-4-chlorphenol;
- Isothiazolinone wie N-Methylisothiazolin-3-on, 5-Chloro-N-methylisothiazolin-3-on, 4,5-Dichloror-N-octylisothiazolin-3-on, N-Octyl-isothiazolin-3-on;
- (Benz)isothiazolinone wie 1,2-Benzisothiazol-3(2H)on, 4,5-Trimethylisothiazol-3-on, 2-Octyl-2H-isothiazol-3-on;
- Pyridine wie 1-Hydroxy-2-pyridinthion (und ihre Na-, Fe-, Mn-, Zn-Salze), Tetrachlor-4-methylsulfonylpyridin;
- Metallseifen wie Zinn-, Kupfer-, Zinknaphthenat, -octat, -2-ethylhexanoat, - oleat, -phosphat, -benzoat;
- Organozinnverbindungen, z. B. Tributyl(TBT)zinnverbindungen wie Tributylzinn und Tributyl(mononapthenoyloxy)zinnderivate;
- Dialkyldithiocarbamat und die Na- und Zn-Salze von Dialkyldithiocarbamaten, Tetramethylthiouramdisulfid;
- Nitrile wie 2,4,5,6-Tertrachlorisophthalodinitril;
- Benzthiazole wie 2-Mercaptobenzothiazol;
- Chinoline wie 8-Hydroxychinolin und deren Cu-Salze;
- Tris-N-(cyclohexyldiazeniumdioxy)-aluminium, N-(Cyclohexyldiazeniumdioxy)-tributylzinn, Bis-N-(cyclohexyldiazeniumdioxy)-kupfer;
- 3-Benzo(b)thien-2-yl-5,6-dihydro-1,4,2-oxathiazin-4-oxid (Bethoxazin).

Im Hinblick auf die Verwendung der erfindungsgemäßen Zusammensetzungen im Verfahren der Erfindung zum Schutz von Holz vor Befall mit im Holzschutz relevanten Mikroorganismen - vor allem Schimmelpilze, holzverfärbende und holzzerstörende Pilze - sind insbesondere solche Fungizide bevorzugt, die beispielsweise gegenüber den folgenden Gruppen von Mikroorganismen wirksam sind:

Holzverfärbende Pilze:

- Ascomyceten wie Ophiostoma sp. (z. B. Ophiostoma piceae, Ophiostoma piliferum), Ceratocystis sp. (z. B. Ceratocystis coerulescens), Aureobasidium pullulans, Sclerophoma sp. (z. B. Sclerophoma pityophila);
- Deuteromyceten wie Aspergillus sp. (z. B. Aspergillus niger), Cladosporium sp. (z. B. Cladosporium sphaerospermum), Penicillium sp. (z. B. Penicillium funiculosum), Trichoderma sp. (z. B. Trichoderma viride), Alternaria sp. (z. B. Alternaria alternata), Paecilomyces sp. (z. B. Paecilomyces variotii);

- Zygomyceten wie Mucor sp. (z. B. Mucor hiemalis);

Holzzerstörende Pilze:

- Ascomyceten wie Chaetomium sp. (z. B. Chaetomium globosum), Humicola sp. (z. B. Humicola grisea), Petriella sp. (z. B. Petriella setifera), Trichurus sp. (z. B. Trichurus spiralis);
- Basidiomyceten wie Coniophora sp. (z. B. Coniophora puteana), Coriolus sp. (z. B. Coriolus versicolor), Gloeophyllum sp. (z. B. Gloeophyllum trabeum), Lentinus sp. (z. B. Lentinus lepideus), Pleurotus sp. (z. B. Pleurotus ostreatus), Poria sp. (z. B. Poria placenta, Poria vaillantii), Serpula sp. (z. B. Serpula lacrymans) und Tyromyces sp. (z. B. Tyromyces palustris).

Bevorzugte Wirkstoffe sind daher aus der Gruppe der Conazole, der Gruppe der Morpholine, der Gruppe der Strobilurine, der Gruppe der Thiazole, der Gruppe der Sulfenamide und der Gruppe der Iodverbindungen ausgewählt.

Bevorzugt sind insbesondere solche Fungizide, die in der Biozidverordnung der Europäischen Union (VERORDNUNG (EG) Nr. 2032/2003 DER KOMMISSION vom 4. November 2003) in der Klasse 08 (Holzschutzmittel) genannt sind.

Die in dem erfindungsgemäßen Verfahren verwendeten wässrigen Wirkstoffzubereitungen enthalten den fungiziden Wirkstoff in der Regel in einer Menge von 0,1 bis 50 Gew.-%, vorzugsweise in einer Menge von 0,2 bis 30 Gew.-% und insbesondere in einer Menge von 0,5 bis 20 Gew.-%, bezogen auf das in der Zusammensetzung enthaltene Polymerisat bzw. bezogen auf die Gesamtmenge der Monomere M, die zur Herstellung des Polymerisats eingesetzt werden.

Neben dem fungiziden Wirkstoff können die in dem erfindungsgemäßen Verfahren eingesetzten Zusammensetzungen auch einen oder mehrere insektizide Wirkstoffe enthalten. In einer bevorzugten Ausführungsform liegen die insektiziden Wirkstoffe zusammen mit dem wenigstens einen fungiziden Wirkstoff in den Polymerisatteilchen vor. Vorzugsweise handelt es sich dann bei dem insektiziden Wirkstoff um einen organischen Wirkstoff mit einer geringen Wasserlöslichkeit von in der Regel nicht mehr als 5 g/l, vorzugsweise nicht mehr als 3 g/l und insbesondere nicht mehr als 1 g/l, z. B. 0,001 bis 1 g/l oder 0,002 bis 0,5 g/l bei 25 °C/1013 mbar. Beispiele für geeignete insektizide Wirkstoffe sind die im Compendium of Pesticide Common Names: http://www.hclrss.demon.co.uk/class-insecticides.html (Index of common names) als Insektizide aufgeführten Verbindungen. Hierzu zählen beispielsweise:

- Organo(thio)phosphate wie Acephate, Azamethiphos, Azinphos-methyl, Chlorpyrifos, Chlorpyriphos-methyl, Chlorfenvinphos, Diazinon, Dichlorvos, Dicrotophos, Dimethoate, Disulfoton, Ethion, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Sulprophos, Triazophos, Trichlorfon;
- Carbamate wie Alanycarb, Benfuracarb, Bendiocarb, Carbaryl, Carbosulfan, Fenoxycarb, Furathiocarb, Indoxacarb, Methiocarb, Methomyl, Oxamyl, Pirimicarb, Propoxur, Thiodicarb, Triazamate;
- Pyrethroide wie Allethrin, Bifenthrin, Cyfluthrin, Cyphenothrin, Cypermethrin sowie die alpha-, beta-, theta- und zeta-Isomere, Deltamethrin, Esfenvalerate, Ethofenprox, Fenpropathrin, Fenvalerate, Cyhalothrin, Lambda-Cyhalothrin, Imiprothrin, Permethrin, Prallethrin, Pyrethrin I, Pyrethrin II, Silafluofen, Tau-Fluvalinate, Tefluthrin, Tetramethrin, Tralomethrin, Transfluthrin, Zeta-Cypermethrin;
- Arthropode Wachstumsregulatoren wie a) Chitinsyntheseinhibitoren; z. B. Benzoylharnstoffe wie Chlorfluazuron, Cyromacin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) Ecdysone Antagonisten wie Halofenozide, Methoxyfenozide, Tebufenozide; c) Juvenoide wie Pyriproxyfen, Methoprene, Fenoxycarb; d) Lipidbiosynthese-Inhibitoren wie Spirodiclofen;
- Neonicothinoide wie Flonicamid, Clothianidin, Dinotefuran, Imidacloprid, Thiamethoxam, Nitenpyram, Nithiazin, Acetamiprid, Thiacloprid;
- Pyrazol-Insektizide wie Acetoprole, Ethiprole, Fipronil, Tebufenpyrad, Tolfenpyrad und Vaniliprole.
- Weiterhin Abamectin, Acequinocyl, Amitraz, Azadirachtin, Bifenazate, Cartap, Chlorfenapyr, Chlordimeform, Cyromazine, Diafenthiuron, Diofenolan, Emamectin, Endosulfan, Fenazaquin, Formetanate, Formetanate-Hydrochlorid, Hydramethylnon, Indoxacarb, Piperonylbutoxid, Pyridaben, Pymetrozine, Spinosad, Thiamethoxam, Thiocyclam, Pyridalyl, Fluacyprim, Milbemectin, Spirosmesifen, Flupyrazofos, NCS 12, Flubendiamid, Bistrifluron, Benclothiaz, Pyrafluprole, Pyriprole, Amidoflumet, Flufenerin, Cyflumetofen, Lepimectin, Profluthrin, Dimefluthrin und Metaflumizone.

Hierunter sind solche Insektizide bevorzugt, die gegen holzzerstörende Insekten und insbesondere gegen die folgenden holzzerstörenden Insekten wirksam sind:

Ordnung Coleoptera (Käfer):

- Cerambycidae wie Hylotrupes bajulus, Callidium violaceum;
- Lyctidae wie Lyctus linearis, Lyctus brunneus;
- Bostrichidae wie Dinoderus minutus;
- Anobiidae wie Anobium punctatum, Xestobium rufovillosum;
- Lymexylidae wie Lymexylon navale;
- Platypodidae wie Platypus cylindrus;
- Oedemeridae wie Nacerda melanura.

Ordnung Hymenoptera (Hautflügler):

- Formicidae wie Camponotus abdominalis, Lasius flavus, Lasius brunneus, Lasius fuliginosus;

Ordnung Isoptera (Termiten):

- Calotermitidae wie Calotermes flavicollis, Cryptothermes brevis;
- Hodotermitidae wie Zootermopsis angusticollis, Zootermopsis nevadensis;
- Rhinotermitidae wie Reticulitermes flavipes, Reticulitermes lucifugus, Coptotermes formosanus, Coptotermes acinaciformis;
- Mastotermitidae wie Mastotermes darwiniensis.

Hierzu zählen insbesondere die insektiziden Wirkstoffe aus der Klasse der Pyrethroide arthropode Wachstumsregulatoren, wie Chitinbiosyntheseinhibitoren, ecdysone Antagonisten, Juvenoide, Lipidbiosynthese-Inhibitoren, Neonicotinoide, Pyrazol-Insektizide sowie Chlorfenapyr.

Bevorzugt sind insbesondere solche Insektiziden Wirkstoffe, die in der Biozidverordnung der Europäischen Union (VERORDNUNG (EG) Nr. 2032/2003 DER KOMMISSION vom 4. November 2003) in den Klassen 08 (Holzschutzmittel) und 18 (Insektizide, Akarizde und Substanzen zur Kontrolle anderer Arthropden) genannt sind.

Der insektizide Wirkstoff ist, sofern erwünscht, üblicherweise in einer Menge von 0,1 bis 50 Gew.-%, vorzugsweise in einer Menge von 0,2 bis 30 Gew.-% und insbesondere in einer Menge von 0,5 bis 20 Gew.-%, bezogen auf die das Polymerisat bildenden Monomere M in der erfindungsgemäßen Wirkstoffzusammensetzung enthalten.

Vorzugsweise beträgt die Gesamtmenge an Wirkstoff im Polymerisat der erfindungsgemäßen Zusammensetzungen, die im Verfahren der Erfindung eingesetzt werden, 0,2 bis 50 Gew.-%, insbesondere 0,5 bis 30 Gew.-% und besonders bevorzugt 1 bis 20 Gew.-%, bezogen auf das Polymerisat bzw. auf die das Polymerisat bildenden Monomere M.

Die in dem erfindungsgemäßen Verfahren eingesetzten wässrigen Zusammensetzungen enthalten üblicherweise zur Stabilisierung der Polymerisatteilchen in dem wässrigen Medium oberflächenaktive Substanzen. Hierzu zählen sowohl Schutzkolloide als auch niedermolekulare Emulgatoren, wobei letztere im Unterschied zu den Schutzkolloiden in der Regel ein Molekulargewicht unterhalb 2000 g/mol, insbesondere unterhalb 1000 g/mol (Massenmittel) aufweisen. Die Schutzkolloide und Emulgatoren können sowohl kationischer, anionischer, neutraler als auch zwitterionischer Natur sein.

Beispiele für anionische oberflächenaktive Substanzen sind anionische Emulgatoren wie Alkylphenylsulfonate, Phenylsulfonate, Alkylsulfate, Alkylsulfonate, Alkylethersulfate, Alkylphenolethersulfate, Alkylpolyglykoletherphosphate, Alkyldiphenylethersulfonate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, einschließlich ihrer Alkali-, Erdalkali-, Ammonium- und Amin-Salze. Beispiele für anionische Schutzkolloide sind Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin-Sulfit-Ablauge und Ligninsulfonate sowie Polycarboxylate wie Polyacrylate, Maleinsäureanhydrid/Olefin-Copolymere (z. B. Sokalan® CP9, BASF) sowie die Alkali-, Erdalkali-, Ammonium- und Amin-Salze der vorgenannten Schutzkolloide.

Nichtionische Emulgatoren sind beispielsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolineth-oxylate, Fettsäurepolyglykolester, Isotridecylalkohol, Fettsäureamide, Methylcellulose, Fettsäureester, Silicon-Öle, Alkylpolyglykoside und Glycerolfettsäureester. Beispiele für nichtionische Schutzkolloide sind Polyethylenglykol, Polypropylenglykol, Polyethylenglykolpolypropylenglykol-Blockcopolymere, Poly-ethylenglykolalkylether, Polypropylenglykolalkylether, Polyethylenglykolpolypropylen-glykolether-Blockcopolymere und deren Gemische.

Beispiele für kationische Emulgatoren sind quartäre Ammoniumsalze, z. B. Trimethyl-und Triethyl-$C_6$-$C_{30}$-al-

kylammoniumsalze wie Cocotrimethylammoniumsalze, Trimethylcetylammoniumsalze, Dimethyl- und Diethyl-di-$C_4$-$C_{20}$-alkylammoniumsalze wie Didecyldimethylammoniumsalze und Dicocodimethylammoniumsalze, Methyl- und Ethyl-tri-$C_4$-$C_{20}$-alkylammoniumsalze wie Methyltrioctylammoniumsalze, $C_1$-$C_{20}$-Alkyl-di-$C_1$-$C_4$-alkylbenzylammoniumsalze wie Triethylbenzylammoniumsalze und Cocobenzyldimethylammoniumsalze, Methyl- und Ethyl-di-$C_4$-$C_{20}$-alkylpoly(oxyethyl)ammoniumsalze, z. B. Didecylmethylpoly(oxyethyl)ammoniumsalze, N-$C_6$-$C_{20}$-Alkylpyridiniumsalze, z. B. N-Laurylpyridiniumsalze, N-Methyl- und N-Ethyl-N-$C_6$-$C_{20}$-alkylmorpholiniumsalze, sowie N-Methyl- und N-Ethyl-N'-$C_6$-$C_{20}$-alkylimidazoliniumsalze, insbesondere die Halogenide, Borate, Carbonate, Formiate, Acetate, Propionate, Hydrogencarbonate, Sulfate und Methosulfate.

Beispiele für kationische Schutzkolloide sind Homo- und Copolymere der obengenannten Monomere M2c mit einem Gehalt an Monomere M2c von wenigstens 20 Gew.-%, insbesondere wenigstens 30 Gew.-% Monomere M2c, beispielsweise Homopolymere von N-Vinyl-N-methylimidazoliniumsalzen oder von N-Alkylvinylpyridiniumsalzen sowie Copolymere dieser Monomere mit neutralen, vorzugsweise mit Wasser mischbaren Monomeren M2b

Zwitterionische Emulgatoren sind solche mit betainischen Strukturen. Derartige Substanzen sind dem Fachmann bekannt und können dem einschlägigen Stand der Technik entnommen werden (siehe beispielsweise R. Heusch, in Ullmanns Encylopedia of Industrial Chemistry, 5th ed. on CD-ROM, Wiley-VCH 1997, "Emulsions", Kapitel 7, Tabelle 4).

Üblicherweise enthalten die in dem erfindungsgemäßen Verfahren eingesetzten Zusammensetzungen wenigstens einen Emulgator, vorzugsweise wenigstens einen ionischen Emulgator und gegebenenfalls einen oder mehrer nichtionische Emulgatoren. Im Hinblick auf die Anwendung im Holzschutz hat es sich bewährt, wenn die erfindungsgemäßen Zusammensetzungen wenigstens einen kationischen Emulgator enthalten, insbesondere, wenn zur Herstellung des Polymerisats keine Monomere M2c eingesetzt werden.

Die Menge an Emulgator liegt üblicherweise im Bereich von 0,1 bis 15 Gew.- %, insbesondere im Bereich von 0,2 bis 12 Gew.-%, und besonders bevorzugt 0,7 bis 10 Gew.-%, bezogen auf die Monomere M bzw. auf das Polymerisat P. Die Menge an ionischem Emulgator beträgt dabei vorzugsweise 0,3 bis 10 Gew.-% und insbesondere 0,5 bis 8 Gew.-%, bezogen auf die das Polymerisat konstituierenden Monomere M. Die Menge an nichtionischem Emulgator liegt vorzugsweise im Bereich von 0,2 bis 12 Gew.-%, insbesondere 0,5 bis 10 Gew.-%, bezogen auf die das Polymerisat konstituierenden Monomere M.

Die Herstellung der in dem erfindungsgemäßen Verfahren eingesetzten wässrigen Zusammensetzungen umfasst eine radikalische, wässrige Emulsionspolymerisation einer Öl-in-Wasser-Emulsion der Monomere M, worin die Monomertröpfchen der Emulsion wenigstens einen fungiziden Wirkstoff und gegebenenfalls einen insektiziden Wirkstoff enthalten. Die Polymerisation erfolgt dabei in Analogie zu einer konventionellen Emulsionspolymerisation mit dem Unterschied, dass die zu polymerisierende Monomeremulsion den Wirkstoff in den Monomertröpfchen gelöst enthält.

Die Öl-in-Wasser-Emulsion der Wirkstoff-Monomer-Lösung kann in-situ durch Zugabe einer Lösung des Wirkstoffs in den zu polymerisierenden Monomeren M in das unter Polymerisationsbedingungen befindlichen Polymerisationsgefäß erzeugt werden. Vorzugsweise wird man jedoch den Wirkstoff in den Monomeren M lösen und die so erhaltene Monomerlösung in eine wässrige Monomeremulsion überführen, bevor man die so erhaltene Monomer/Wirkstoff-Emulsion der Polymerisationsreaktion zuführt.

In der Regel erfolgt die Polymerisation nach einem sogenannten Monomerzulaufverfahren, d. h. die Hauptmenge, vorzugsweise wenigstens 70 % und insbesondere wenigstens 90 % der Lösung des Wirkstoffs in den Monomeren M, bzw. die Hauptmenge, vorzugsweise wenigstens 70 % und insbesondere wenigstens 90 % der Monomer/Wirkstoff-Emulsion wird im Verlauf der Polymerisationsreaktion dem Polymerisationsgefäß zugeführt. Vorzugsweise erfolgt die Zugabe der Monomer/Wirkstoff-Lösung bzw. Emulsion über einen Zeitraum von wenigstens 0,5 h, vorzugsweise wenigstens 1 h, z.B. 1 bis 10 h und insbesondere 2 bis 5 h. Die Zugabe der Monomer/Wirkstoff-Lösung bzw. Emulsion kann mit konstanter oder veränderlicher Zugaberate, z. B. in Intervallen mit konstanter Zugaberate oder mit veränderlicher Zugaberate oder kontinuierlich mit veränderlicher Zugaberate erfolgen. Die Zusammensetzung der Mono-mer/Wirkstoff-Lösung bzw. Emulsion kann während der Zugabe konstant bleiben oder geändert werden, wobei Änderungen sowohl bezüglich der Monomerzusammensetzung als auch bezüglich der Art des Wirkstoffs oder der Konzentration des Wirkstoffs vorgenommen werden können.

In einer bevorzugten Ausführungsform der Erfindung ändert man im Verlauf der Monomerzugabe die Monomerzusammensetzung dergestalt, dass man in den Polymer-teilchen Polymerbereiche mit unterschiedlicher Glasübergangstemperatur erhält. Dies erreicht durch eine sogenannten Stufenpolymerisation. Hierzu polymerisiert man zunächst in einer ersten Stufe eine erste Monomer/WirkstoffLösung oder-Emulsion, deren Monomerzusammensetzung einer Glasübergangstemperatur $T_G{}^1$ entspricht, und gibt hierzu anschließend eine zweite Monomer/Wirkstoff-Lösung oder -Emulsion, deren Monomerzusammensetzung einer Glasübergangstemperatur $T_G{}^2$ entspricht (2. Stufe) und gegebenenfalls im Anschluss daran sukzessive eine oder mehrere weitere Monomer/Wirkstoff-Lösungen oder - Emulsionen, deren Monomerzusammensetzung jeweils einer Glasübergangstemperatur $T_G{}^n$ entspricht, wobei n für die jeweilige Stufe steht. Vorzugsweise unterscheiden sich die jeweiligen Glasübergangstemperaturen in aufeinanderfolgenden Polymerisationsstufen erhaltenen Polymere um wenigstens 10 K, insbesondere um wenigstens 20 K und besonders bevorzugt um wenigstens 30 K, z. B. 30 K bis 200 K, insbesondere 40 K bis 160 K. In der Regel wird die in einer Monomermenge polymerisierte Monomermenge wenigstens 5 Gew.-%, vorzugsweise wenigstens 10 Gew.-%, z. B. 5 bis 95 Gew.-%, insbesondere 10 bis 90 Gew.-% bei einer 2-stufigen Polymerisation und 5 bis 90 bzw. 5 bis 85 Gew.-%, insbesondere 10 bis 80 Gew.-% bei einer drei- oder mehrstufigen Polymerisation ausmachen.

Für die Herstellung der in dem erfindungsgemäßen Verfahren eingesetzten Wirkstoffzusammensetzung und für die Eigenschaften der Wirkstoffzusammensetzung hat es sich als vorteilhaft erwiesen, wenn man die Emulsionspolymerisation in Gegenwart eines Saatpolymers (Saatlatex) durchführt. Hierbei handelt es sich um einen feinteiligen Polymerlatex, dessen mittlere Teilchengröße üblicherweise nicht mehr als 100 nm, insbesondere nicht mehr als 80 nm und besonders bevorzugt nicht mehr als 50 nm beträgt. Die den Saatlatex konstituierenden Monomere sind vorzugsweise zu wenigstens 90 Gew.-%, insbesondere wenistens 95 Gew.-% und häufig zu mehr als 99 Gew.-% unter den Monomeren M1 ausgewählt, wobei der Saatlatex zur Stabilisierung auch geringe Mengen, z. B. 0,1 bis 10 Gew.-%, insbesondere 0,1 bis 5 Gew.-% und speziell 0,1 bis 1 Gew.-% davon verschiedene Monomere M2, z. B. Monomere M2a enthalten kann. Häufig weist der Saatlatex eine Glasübergangstemperatur von wenigstens 10, insbesondere wenigstens 50 und häufig von wenigstens 80°C auf. Die Menge an Saatlatex beträgt üblicherweise 0,01 bis 5 Gew.-%, insbesondere 0,1 bis 4 Gew.-%, bezogen auf die zu polymerisierenden Monomere M1. Vorzugsweise befindet sich die Hauptmenge, und insbesondere die Gesamtmenge des Saatlatex zu Beginn der Polymerisation vollständig im Reaktionsgefäß. Der Saatlatex kann auch in-situ im Polymerisationsgefäß durch radikalische Emulsionspolymerisation der den Saatlatex bildenden Monomere generiert werden, wobei die den Saatlatex bildenden Monomere aus den vorgenannten Monomeren M1 und M2 und insbesondere zu wenigstens 90 Gew.-% aus den Monomeren M1 ausgewählt sind. Die gewünschte Teilchengröße des Saatlatex kann in an sich bekannter Weise über das Verhältnis von Monomer zu Emulgator gesteuert werden.

Die für die erfindungsgemäße Emulsionspolymerisation geeigneten Starter sind die für eine Emulsionspolymerisation geeigneten und üblicherweise verwendeten Polymerisationsinitiatoren, die eine radikalische Polymerisation der Monomere M auslösen. Hierzu zählen Azoverbindungen wie 2,2'-Azobisisobutyronitril, 2,2'-Azobis(2-methyl-butyronitril), 2,2'-Azobis[2-methyl-N-(-2-hydroxyethyl)propionamid, 1,1'-Azobis(1-cyclohexancarbonitril), 2,2'-Azobis(2,4-dimethylvaleronitril), 2,2'-Azobis(N,N'-dimethylenisobutyroamidin)dihydrochlorid, und 2,2'-Azobis(2-amidinopropan)dihydrochlorid, organische oder anorganische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat, Salze der Peroxodischwefelsäure und Redox-Initiatorsysteme.

Vorzugsweise setzt man wasserlösliche Initiatoren ein, z. B. kationische Azoverbindungen wie Azobis(dimethylamidinopropan), Salze der Peroxodischwefelsäure, insbesondere ein Natrium-, Kalium- oder Ammoniumsalze oder ein Redoxinitiatorsystem, das als Oxidationsmittel ein Salz der Peroxodischwefelsäure, Wasserstoffperoxid oder ein organisches Peroxid wie tert.-Butylhydroperoxid. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersazle, Chromsalze oder Mangansalze enthalten wie beispielsweise das Redoxinitiatorsystem Ascorbinsäure/Eisen(II)sulfat/Natriumperoxodisulfat.

Üblicherweise setzt man den Initiator in einer Menge von 0,02 bis 2 Gew.-% und insbesondere 0,05 bis 1,5 Gew.-%, bezogen auf die Menge der Monomere M ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Vorzugsweise gibt man die Hauptmenge des Initiators, insbesondere wenigstens 80 %, z. B. 80 bis 99,5 % des Initiators im Verlauf der Polymerisation in den Polymerisationsreaktor.

Druck und Temperatur sind für die Herstellung der in dem erfindungsgemäßen Verfahren eingesetzten Wirkstoffzusammensetzungen von untergeordneter Bedeutung. Die Temperatur hängt naturgemäß vom eingesetzten Initiatorsystem ab und eine optimale Polymerisationstemperatur kann vom Fachmann durch Routineexperimente ermittelt werden. Üblicherweise liegt die Polymerisationstemperatur im Bereich von 20 bis 110 °C, häufig im Bereich von 50 bis 95 °C. Der Polymerisation wird üblicherweise bei Normaldruck bzw. Umgebungsdruck durchgeführt. Sie kann aber auch bei erhöhtem Druck, z. B. bis 3 bar oder bei geringfügig erniedrigtem Druck z. B. > 800 mbar durchgeführt werden.

Als oberflächenaktive Substanzen kommen die üblicherweise für die Emulsionspolymerisation eingesetzten Emulgatoren und Schutzkolloide in Betracht, die oben als Bestandteile der erfindungsgemäßen Wirkstoffformulierungen bereits genannt wurden. Die für eine Emulsionspolymerisation üblicherweise eingesetzten Mengen an oberflächenaktiven Substanzen liegen üblicherweise in den oben angegebenen Bereichen, so dass die Gesamtmenge oder ein Teil der in den erfindungsgemäßen Zusammensetzungen oberflächenaktiven Substanzen über die Emulsionspolymerisation zugeführt wird. Es ist jedoch auch möglich nur einen Teil, z. B. 10 bis 90 Gew.-%, insbesondere 20 bis 80 Gew.-% der in der erfindungsgemäßen Zusammensetzung enthaltenen oberflächenaktiven Substanzen in der Emulsionspolymerisation einzusetzen und die Restmenge an oberflächenaktiver Substanz im Anschluss an die Emulsionspolymerisation, vor oder nach eine gegebenenfalls durchzuführenden Desodorierung der Emulsionspolymerisation zuzugeben (Nachseifen).

Selbstverständlich kann das Molekulargewicht der Polymere durch Zugabe von Reglern in einer geringen Menge, z. B. 0,01 bis 2 Gew.-%, bezogen auf die polymerisierenden Monomere M, eingestellt werden. Als Regler kommen insbesondere organische Thioverbindungen, ferner Allylalkohole und Aldehyde in Betracht.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation werden die verwendeten Polymerdispersionen vor ihrer erfindungsgemäßen Verwendung häufig alkalisch, vorzugsweise auf pH-Werte im Bereich von 7 bis 10 eingestellt. Zur Neutralisation können Ammoniak oder organische Amine einsetzt, sowie vorzugsweise Hydroxide, wie Natriumhydroxid, Kaliumhydroxid oder Calciumhydroxid verwendet werden.

Auf diese Weise erhält man stabile, wässrige Polymerdispersionen, welche wenigstens einen fungiziden Wirkstoff und gegebenenfalls einen oder mehrere insektiziden Wirkstoff in den Polymerteilchen der Dispersion enthalten. Daneben enthalten die so erhaltenen Dispersionen die oben genannten oberflächenaktiven Substanzen. Die so erhaltenen Wirkstoffzubereitungen zeichnen sich durch eine hohe Stabilität und einen geringen Gehalt an flüchtigen organischen Verbindungen aus, die üblicherweise nicht mehr als 1 Gew.-%, häufig nicht mehr als 0,1 Gew.-% und insbesondere nicht mehr als 500 ppm, bezogen auf das Gesamtgewicht der Zusammensetzung ausmachen. Flüchtige Verbindungen sind hier und im Folgenden alle organischen Verbindungen, die bei Normaldruck einen Siedepunkt unterhalb 200 °C aufweisen.

Der Feststoffgehalt der in dem erfindungsgemäßen Verfahren eingesetzten Zusammensetzungen wird in erster Näherung durch den Wirkstoff und das Polymerisat bestimmt und liegt in der Regel im Bereich von 10 bis 60 Gew.-% und insbesondere im Bereich von 20 bis 50 Gew.-%.

Die so erhältlichen Wirkstoffzusammensetzungen können als solche oder nach Verdünnung direkt eingesetzt werden. Außerdem können die in dem erfindungsgemäßen Verfahren eingesetzten Zusammensetzungen noch übliche Zusatzstoffe (Additive) enthalten, z. B. die Viskosität verändernde Additive (Andicker, Verdicker), Antischaummittel, Bakterizide und Frostschutzmittel.

Geeignete Verdicker sind Verbindungen, die der Formulierung ein pseudoplastisches Fließverhalten verleihen, d. h. hohe Viskosität im Ruhezustand und niedrige Viskosität im bewegten Zustand. Hier sind beispielsweise Polysaccharide bzw. organische Schichtmineralien wie Xanthan Gum® (Kelzan® der Fa. Kelco), Rhodopol® 23 (Rhone Poulenc) oder Veegum® (Firma R.T. Vanderbilt) oder Attaclay® (Firma Engelhardt) zu nennen, wobei Xanthan-Gum® bevorzugt verwendet wird.

Als für die erfindungsgemäßen Dispersionen geeignete Antischaummittel kommen beispielsweise Silikonemulsionen (wie z. B. Silikon® SRE, Firma Wacker oder Rhodorsil® der Firma Rhodia), langkettige Alkohole, Fettsäuren, fluororganische Verbindungen und deren Gemische in Betracht.

Bakterizide können zur Stabilisierung den in dem erfindungsgemäßen Verfahren verwendeten Zusammensetzungen gegen Befall mit Mikroorganismen zugesetzt werden. Geeignete Bakterizide sind beispielsweise Proxel® der Fa. Avecia (bzw. Fa. Arch) oder Acticide® RS der Fa. Thor Chemie und Kathon® MK der Firma Rohm & Haas.

Geeignete Frostschutzmittel sind organische Polyole, z. B. Ethylenglycol, Propylenglycol oder Glycerin. Diese werden üblicherweise in Mengen von nicht mehr als 10 Gew.-%, bezogen auf das Gesamtgewicht der Wirkstoffzusammensetzung eingesetzt.

Gegebenenfalls können die in dem erfindungsgemäßen Verfahren eingesetzten Wirkstoffzusammensetzungen 1 bis 5 Gew.-% Puffer, bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Daneben können die in dem erfindungsgemäßen Verfahren eingesetzten wässrigen Zusammensetzungen mit konventionellen Bindemitteln, beispielsweise wässrigen Polymerdispersionen, wasserlöslichen Harzen, beispielsweise wasserlöslichen Alkydharzen, oder mit Wachsen formuliert werden.

Für die Verwendung in dem erfindungsgemäßen Verfahren zum Holzschutz können die erfindungsgemäßen wässrigen Wirkstoffzusammensetzungen auch mit klassischen wasserlöslichen Holzschutzmitteln, insbesondere mit

deren wässrigen Lösungen, formuliert werden, um die Gesamtwirksamkeit gegen holzzerstörende Organismen zu verbessern. Hierbei handelt es sich beispielsweise um wässrige Zubereitungen konventioneller Holzschutzsalze, beispielsweise von Salzen auf Basis von Borsäure und Alkaliboraten, auf Basis von quaternären Ammoniumverbindungen, z. B. Trimethyl- und Triethyl-$C_6$-$C_{30}$-alkylammoniumsalze wie Cocotrimethylammoniumchlorid, Trimethylcetylammoniumsalze, Dimethyl- und Diethyl-di-$C_4$-$C_{20}$-alkylammonium-salze wie Didecyldimethylammoniumchlorid- und - bromid, Dicocodimethylammoniumchlorid, $C_1$-$C_{20}$-Alkyl-di-$C_1$-$C_4$-alkylbenzylammoniumsalze wie Cocobenzyldimethylammoniumchlorid, Methyl- und Ethyl-di-$C_4$-$C_{20}$-alkylpoly(oxyethyl)ammoniumsalze, z. B. Didecylmethylpoly(oxyethyl)ammoniumchlorid und propionat sowie die Borate, Carbonate, Formiate, Acetate, Hydrogencarbonate, Sulfate und Methosulfate, wässrige Zubereitungen von Kupfer-Amin-Komplexen, insbesondere wässrige Zubereitungen von Kupferethanolaminhaltigen Salzen, beispielsweise Cu-HDO. Selbstverständlich können die erfindungsgemäßen wässrigen Wirkstoffzubereitungen auch mit anderen wässrigen fungiziden und insektiziden Wirkstoffzusammensetzungen formuliert werden, beispielsweise mit konventionellen Emulsionskonzentraten, Suspensionskonzentraten, Suspoemulsionskonzentraten der vorgenannten Wirkstoffe, z. B. der vorgenannten Fungizide aus der Gruppe der Azole und der Strobilurine, oder der vorgenannten Insektizide, oder mit den eingangs erwähnten Mikroemulsionen der vorgenannten Fungizide und Insektizide. Durch das Abmischen der erfindungsgemäßen wässrigen Wirkstoffzusammensetzung mit konventionellen wässrigen Zubereitungen der vorgenannten Wirkstoffe erzielt man zum einen eine Verbreiterung des Wirkspektrums, wenn die konventionelle Zubereitung einen anderen Wirkstoff enthält als die erfindungsgemäße wässrige Wirkstoffzusammensetzung. Zum anderen gehen die Vorteile der erfindungsgemäßen Wirkstoffzusammensetzungen durch das Formulieren mit konventionellen wässrigen Wirkstoffzubereitungen, insbesondere die verbesserte Haftung an Holz nicht verloren. Folglich kann man die Anwendungseigenschaften einer konventionellen wässrigen Wirkstoffzubereitung durch Formulierung mit einer erfindungsgemäßen wässrigen Wirkstoffzusammensetzung des gleichen Wirkstoffs verbessern.

Das erfindungsgemäße Verfahren zum Schutz von Holz gegen Mikroorganismenbefall durch Behandeln des Holzes mit einer erfindungsgemäßen Wirkstoffzusammensetzung ist mit einer Reihe von Vorteilen verbunden. Zum einen handelt es sich bei den erfindungsgemäßen Zusammensetzungen um stabile wässrige Formulierungen von fungiziden Wirkstoffen, die in Wasser nicht oder nur in geringem Ausmaß löslich sind. Insbesondere werden die bei konventionellen Formulierungen sowie bei Mikro- oder Nanodispersionen der Wirkstoffe beobachteten Phasentrennprobleme und ein Absetzen des Wirkstoffs nicht beobachtet, auch bei Anwendung drastischer Bedingungen wie sie in den für die Imprägnierung von Holz mit fungiziden Wirkstoffen angewendeten Prozessen auftreten. Der Gehalt an organischen flüchtigen Verbindungen ist bei üblicher Additivierung geringer als bei vergleichbaren konventionellen Formulierungen sowie im Vergleich zu Mikro- bzw. Nanodispersionen von Wirkstoffen, gleichzeitig ist der Emulgatoranteil geringer, bezogen auf den eingesetzten Wirkstoff. Die Auswaschung des Wirkstoffs aus dem behandelten Material bei Einwirkung von Wasser ist im Vergleich zu anderen Formulierungen deutlich herabgesetzt. Weiterhin werden Wechselwirkungen der Wirkstoffe mit anderen Formulierungsbestandteilen oder Co-Wirkstoffen, wie sie bei konventioneller Formulierung häufig auftreten, nicht beobachtet. Zudem wird der Abbau der Wirkstoffe durch Substrat- oder Umwelteinflüsse, wie pH-Wert des Milieus oder UV-Strahlung verlangsamt oder gar ganz unterbunden. Eine verringerte Wirksamkeit des Wirkstoffs durch die Einbindung in eine Polymermatrix wird überraschenderweise nicht beobachtet.

Das Behandeln erfolgt in an sich bekannter Weise durch Tränken des Substrats mit einer unverdünnten oder einer mit Wasser verdünnten erfindungsgemäßen Wirkstoffzusammensetzung mit Hilfe von Druckunterschieden. Die hierzu geeigneten Verfahren, wie z.B. das Kesseldruckverfahren sowie die Doppelvakuumtränkung, sind aus Ullmann's Encyclopedia of Industrial Chemistry, Wood preservation, 5. Auflage auf CD-ROM, Wiley VCH, Weinheim, 1997, Kapitel 7, bekannt.

Das Behandeln mit den erfindungsgemäßen Wirkstoffzusammensetzungen kann an die jeweils technischen Gegebenheiten in an sich bekannter Weise angepasst werden. Die Anwendungskonzentration hängt dabei vom Gefährdungsgrad des Holzes sowie von dem jeweiligen Behandlungsverfahren ab und liegt üblicherweise im Bereich von 0,05 mg bis 10 g Wirkstoff pro kg Holz.

Die folgenden Beispiele sollen die Erfindung verdeutlichen, ohne sie jedoch einzuschränken:

Die angegebenen Viskositäten wurden in einem Rotationsviskosimeter nach Brookfield in Anlehnung an ISO 2555 bei 23 °C ermittelt.

Die angegebenen Teilchengrößen wurden durch quasielastische Lichtstreuung nach den oben beschriebenen Methoden an verdünnten Dispersionen (0,01 bis 0,1 gew.%ig) bestimmt. Angegeben wird der mittlere Durchmesser, welcher durch der Kumulantenauswertung der gemessenen Autokorrelationsfunktion bestimmt wurde. Die Glasübergangstemperatur wurde in Anlehnung an ASTM-D3418 mittels Differentialcalorimetrie bestimmt.

## I. Herstellung der Wirkstoffzusammensetzung

### Beispiel 1a (wässrige Polymerdispersion mit 3 Gew.-% Wirkstoff, Dispersion D1)

In einem Reaktionsgefäß mit Rührer legte man 300 g entionisiertes Wasser und 13,6 g einer 33 gew.-%igen, wässrigen Polystyroldispersion (mittlere Teilchengröße 30 nm) vor, spülte die Vorlage mit Stickstoff und erwärmte dann auf 75 °C. Unter Rühren und Beibehaltung der Temperatur gab man gleichzeitig beginnend die Zuläufe 1 innerhalb 3 h sowie Zulauf 2 innerhalb 3,15 h zu. Nach Beendigung von Zulauf 2 behielt man die Temperatur weitere 30 min bei und gab dann 3,0 g einer 25 gew.-%igen, wässrigen Ammoniaklösung zu. Anschließend gab man unter Beibehaltung der Temperatur innerhalb 90 min die Zuläufe 3 und 4 zu Zwecken der chemischen Desodorierung zu und kühlte dann auf Raumtemperatur ab. Danach gab man Zulauf 5 in einer Portion zu, rührte 10 min, stellte dann mit Ammoniak einen pH-Wert von 7 bis 7,5 ein und filtrierte dann über ein Netz mit einer Maschenweite von 125 μm.

Die erhaltene Dispersion hatte einen Feststoffgehalt von 38,7 Gew.-% und eine Viskosität von 30 mPa·s. Die Glasübergangstemperatur des Polymerisats lag bei +16 °C. Die mittlere Teilchengröße, bestimmt mittels Lichtstreuung, lag bei 146 nm.

| | |
|---|---|
| Zulauf 1: | |
| 400,0 g | entionisiertes Wasser |
| 25,7 g | einer 28 gew.-%igen Lösung eines anionischen Emulgators E1[1)] |
| 21,0 g | einer 28 gew.-%igen Lösung eines nichtionischen Emulgators E2[2)] |
| 7,8 g | Acrylsäure |
| 292,0 g | Styrol |
| 237,0 g | n-Butylacrylat |
| 60,0 g | Ethylacrylat |
| 3,0 g | Acrylamid |
| 18,0 g | Epoxiconazol |
| Zulauf 2: | |
| 100 g | entionisiertes Wasser |
| 2,4 g | Natriumperoxodisulfat |
| Zulauf 3: | |
| 22,0 g | entionisiertes Wasser |
| 2,6 g | t-Butylhydroperoxid (70 gew.-%ig) |
| Zulauf 4: | |
| 25,0 g | entionisiertes Wasser |
| 1,7 g | Natriumhydroxymethansulfinat |
| Zulauf 5: | |
| 37,0 g | entionisiertes Wasser |
| 30,0 g | Emulgatorlösung E2 |
| 1) Natriumlaurylsulfat<br>2) $C_{16}/C_{18}$-Fettalkoholethoxylat mit im Mittel 18 Ethylenoxid-Einheiten pro Molekül | |

### Beispiel 1b (wässrige Polymerdispersion mit 2 Gew.% Fungizid-Wirkstoff und 1 Gew.% Insektizid-Wirkstoff, Dispersion D2)

Die Herstellung erfolgte analog zu der Vorschrift aus Beispiel 1 a, wobei Zulauf 1 die folgende Zusammensetzung hatte:

| Zulauf 1: | |
|---|---|
| 400,0 g | entionisiertes Wasser |
| 25,7 g | 28 gew.-%igen Lösung eines anionischen Emulgators E1[1)] |
| 21,0 g | einer 28 gew.-%igen Lösung eines nichtionischen Emulgators E2[2)] |
| 7,8 g | Acrylsäure |
| 322,0 g | Styrol |
| 177,0 g | n-butylacrylat |
| 60,0 g | Ethylacrylat |
| 30,0 g | Acrylnitril |
| 3,0 g | Acrylamid |
| 12,0 g | Epoxiconazol |
| 6,0 g | Chlorfenapyr |

Die erhaltene Dispersion hatte einen Feststoffgehalt von 39 Gew.-% und eine Viskosität von 45 mPa·s. Die Glasübergangstemperatur des Polymerisats lag bei 31 °C. Die mittlere Teilchengröße, bestimmt mittels Lichtstreuung, lag bei 151 nm.

**Beispiel 2 (Stufenpolymerisate mit unterschiedlichen Wirkstoffen, Dispersionen D3 bis D8)**

**Allgemeine Vorschrift:**

In einem Reaktionsgefäß legte man 183 g Wasser und 75,8 g einer wässrigen Polystyroldispersion (33 gew.-%ig, mittlerer Teilchendurchmesser 30 nm) vor, spülte mit Stickstoff und erwärmte auf 85 °C. Hierzu gab man unter Beibehaltung der Temperatur 25 Gew.-% einer Lösung von 1,5 g Natriumperoxodisulfat in 21,4 g Wasser (Zulauf 4). Nach 10 min startete man, zeitgleich beginnend, die Zugabe von Zulauf 1 und die Zugabe der Restmenge von Zulauf 4. Zulauf 1 wurde unter Beibehaltung der Temperatur innerhalb 90 min zugegeben, Zulauf 4 innerhalb 255 min. Nach Beendigung der Zugabe von Zulauf 1 behielt man die Temperatur 30 min bei, gab dann Zulauf 2 innerhalb 60 min zu, behielt die Temperatur weitere 45 min bei und gab dann unter Beibehaltung der Temperatur Zulauf 3 innerhalb 30 min zu. Nach Beendigung von Zulauf 3 behielt man die Temperatur weitere 30 min bei und kühlte dann auf Raumtemperatur.

| Zulauf 1: | |
|---|---|
| 220,1 g | Wasser |
| 220,8 g | Styrol |
| 1,6 g | Allylmethacrylat |
| 11,1 g | Emulgatorlösung E3 |
| x g | Wirkstoff (siehe Tabelle 1) |
| | |
| Zulauf 2: | |
| 135,6 g | Wasser |
| 180,4 g | n-Butylacrylat |
| 2,1 g | Allylmethacrylat |
| 7,2 g | Emulgatorlösung E3 |
| y g | Wirkstoff (siehe Tabelle 1) |
| | |

(fortgesetzt)

| Zulauf 3: | |
|---|---|
| 92,5 g | Wasser |
| 19,7 g | Styrol |
| 75,5 g | Methylmethacrylat |
| 1,7 g | Emulgatorlösung E3 |
| z g | Wirkstoff (siehe Tabelle 1) |

Emulgatorlösung E3: 45 gew.-%ige wässrige Lösung eines $C_{16}$-Alkyl-Diphenylethersulfonsäure-Natriumsalzes.

Tabelle 1

| Dispersion | Wirkstoff | x [g] | y [g] | z [g] |
|---|---|---|---|---|
| D3 | Metconazol | 26,4 | 14,4 | 12,0 |
| D4 | Cyproconazol | 21,6 | 10,8 | 10,8 |
| D5 | Epoxiconazol | 30,0 | 6,0 | 6,0 |
| D6 | Tebuconazol | 15,0 | 18,0 | - |
| D7 | JPBC[1)] | 21,0 | 4,2 | 6,0 |
| D8 | Epoxiconazol + Chlorfenapyr | 4,0 | 4,0 | 4,0 |
| | | 2,0 | 2,0 | 2,0 |
| 1) JPBC = 3-Iod-2-propylbutylcarbamat. | | | | |

Die erhaltene Dispersionen hatte einen Feststoffgehalt von 45 Gew.-% und eine Viskosität von 115 mPa·s. Das Polymerisat zeigte 2 Glasübergangstemperaturen bei -31 und +99 °C. bestimmt mittels DSC. Die mittlere Teilchengröße, bestimmt mittels Lichtstreuung, lag bei 95 bis 105 nm.

**Beispiel 3 (kationische Dispersionen D9 - D13 mit unterschiedlichen Wirkstoffen)**

**Allgemeine Herstellungsvorschrift:**

465 g entionisiertes Wasser, 5 Gew.-% von Zulauf 1 und 10 Gew.-% von Zulauf 2 erhitzte man auf 80 °C. Nach 10 min begann man mit der Zugabe der Restmenge der Zuläufe 1 und 2. Die Zulaufdauer betrug 3,5 h. Nach Beendigung der Zuläufe behielt man die Mischung weitere 30 min bei 80 °C, kühlte dann auf Raumtemperatur ab.

| Zulauf 1: | |
|---|---|
| 496,1 g | entionisiertes Wasser |
| 7,6 g | Schwefelsäure (50 gew.-%ig) |
| 361,0 g | Methylmethacrylat |
| 19,0 g | Dimethylaminoethylmethacrylat |
| 57,0 g | Emulgatorlösung E4 |
| x g | Wirkstoff (siehe Tabelle 2) |
| | |
| Zulauf 2: | |
| Lösung von 1,5 g 2,2'Azobis(N,N'-dimethylisobutyramidin) in 63,3 g entionisiertem Wasser | |

Emulgatorlösung E4 : 40 gew.-%ige wässrigeLösung eines durch sukzessive Ethoxylierung von Stearylamins mit 4-5 Mol Ethylenoxid und anschließende Quaternisierung mit Dimethylsulfat erhaltenen kationischen Emulgators.

Tabelle 2

| Dispersion | Wirkstoff | x [g] |
|---|---|---|
| D9 | Metconazol | 61,8 |
| D10 | Cyproconazol | 42,9 |
| D11 | Epoxiconazol | 0,4 |
| D12 | Tebuconazol | 19,0 |
| D13 | JPBC | 18,2 |

Die erhaltene Dispersion hatte einen Feststoffgehalt von 29,5 Gew.-% und eine Viskosität von 100 mPa·s. Das Polymerisat zeigte eine Glasübergangstemperatur bei 87°C. bestimmt mittels DSC. Die mittlere Teilchengröße, bestimmt mittels Lichtstreuung, lag bei 157 bis 175 nm.

**Beispiel 4 (kationische Dispersionen D14 - D18 mit unterschiedlichen Wirkstoffen**

**Allgemeine Herstellungsvorschrift:**

465 g entionisiertes Wasser, Zulauf 1 und 10 Gew.-% von Zulauf 2 erhitzte man auf 80 °C. Nach 10 min begann man mit der Zugabe der Restmenge von Zulauf 2 und von Zulauf 3. Die Zulaufdauer von Zulauf 2 und Zulauf betrug 3,5 h. Nach Beendigung der Zuläufe behielt man die Mischung weitere 30 min bei 80 °C, kühlte dann auf Raumtemperatur ab.

| | |
|---|---|
| Zulauf 1: | |
| 46,1 g | entionisiertes Wasser |
| 38.0 g | Styrol |
| 7,6 g | 3-(N,N)-Dimethylaminopropylmethacrylamid |
| 14,2 | g Emulgatorlösung E4 (s.o.) |
| | |
| Zulauf 2: | |
| Lösung von Wasser | 1,5 g 2,2-'Azobis(N,N'-dimethylisobutyramidin) in 63,3 g entionisiertem |
| | |
| Zulauf 3: | |
| 450,1 g | entionisiertes Wasser |
| 7,6 g | Acrylsäure |
| 270,0 g | Methylmethacrylat |
| 57,0 g | Dimethylaminoethylmethacrylat |
| 42,8 g | Emulgatorlösung E4 (s.o.) |
| x g | wirkstoff (siehe Tabelle 3) |

Tabelle 3

| Dispersion | Wirkstoff | x [g] |
|---|---|---|
| D14 | Metconazol | 61,8 |
| D15 | Cyproconazol | 42,9 |

(fortgesetzt)

| Dispersion | Wirkstoff | x [g] |
|---|---|---|
| D16 | Epoxiconazol | 0,4 |
| D17 | Tebuconazol | 19,0 |
| D18 | JPBC[1)] | 18,2 |

Die erhaltene Dispersion hatte einen Feststoffgehalt von 29,8 Gew.-% und eine Viskosität von 105 mPa·s. Das Polymerisat zeigte eine Glasübergangstemperatur bei 110 °C, bestimmt mittels DSC. Die mittlere Teilchengröße, bestimmt mittels Lichtstreuung, lag bei 155 bis 175 nm.

**II. Anwendungsprüfung :**

Die Grenzen der Wirksamkeit der erfindungsgemäßen Zusammensetzungen gegenüber holzzerstörenden Basidiomyceten wurden an Holzproben aus Pinus spp. (Southern Yellow Pine) mit den Abmessungen 40 x 15 x 4 $mm^3$ bestimmt. Die als sog. Bravery Test bekannte Prüfmethode an verkleinerten Holzproben ist eng an EN 113 angelehnt und dient zur Bestimmung der vorbeugenden Wirkung von Holzschutzmitteln gegen holzzerstörende Pilze (siehe hierzu A. F. Bravery, Intern. Res. Group Wood Pres., Doc. No. IRG/WP/2113, 5S., Stockholm 1978). Die mit der erfindungsgemäßen Zusammensetzung imprägnierten Holzproben wurden ohne bzw. mit Auswaschbeanspruchung nach EN 84 getestet. Die Prüfung erfolgte mit 6 unterschiedlichen Wirkstoffkonzentrationen im Bereich von 0,4 bis 4 Gew.-% Wirkstoff (bei Epoxiconazol) bzw. 0,63 bis 6,3 Gew.-% Wirkstoff (bei Tebuconazol) und jeweils 5 Parallelproben je Wirkstoffkonzentration und Prüfpilz. Als Prüfpilze dienten Coniophora puteana BAM Ebw. 15 und Poria placenta FPRL 280. Die durch Pilzbefall bewirkte Zerstörung des Holzes wurde durch den Masseverlust der Probehölzer erfasst, der nach 6 Wochen bestimmt wurde. Wenn der Masseverlust weniger als 3 Gew.-%, bezogen auf die Anfangstrockenmasse des Prüfkörpers beträgt, wird der durch das Schutzmittel bei einer be-stimmten Wirkstoffkonzentration erreichte Schutz des Holzes als ausreichend angesehen. Die Konzentrationsgrenze der Wirksamkeit wird in zwei Konzentrationen angegeben. Die niedrigere Konzentration gibt den Wert an, bei dem das Holz nicht mehr ausreichend geschützt ist und die höhere Konzentration entspricht der Mindestkonzentration, mit der ein vollständiger Schutz erreicht wird.

Getestet wurde eine Dispersion mit einem Wirkstoffgehalt von 5,52 Gew.-% an Epoxiconazol (bezogen auf den Feststoffgehalt bzw. 2,4 Gew.-%, bezogen auf die Dispersion), einem Feststoffgehalt von 43,7 Gew.-%, einer mittleren Teilchengröße von 107 nm, hergestellt nach der Vorschrift in Beispiel 2 sowie eine Dispersion mit einem Wirkstoffgehalt von 4,69 Gew.-% an Tebuconazol (bezogen auf den Feststoffgehalt bzw. 2,05 Gew.-%, bezogen auf die Dispersion), einem Feststoffgehalt von 43,8 Gew.-%, einer mittleren Teilchengröße von 98 nm, hergestellt nach der Vorschrift in Beispiel 2.

Die Grenzen der Wirksamkeit sind in Tabelle 4 dargestellt. Zum Vergleich sind die für eine Lösung des Wirkstoffs in Aceton ermittelten Werte angegeben.

Tabelle 4:

| Prüfpilz | Grenzen der Wirksamkeit [kg/$m^3$] | |
|---|---|---|
| Dispersion mit Epoxiconazol | Ohne Auswaschung | Mit Auswaschung (EN 84) |
| CP | < 0,066 | < 0,066 |
| PP | < 0,066 | < 0,066 |
| Lösung von Epoxiconazol | | |
| CP | < 0,19 | 0,11-0,16 |
| PP | < 0,19 | 0,11-0,18 |
| Dispersion mit Tebuconazol | | |
| CP | < 0,092 | < 0,089 |
| PP | 0,091-0,143 | < 0,092 |
| Lösung von Tebuconazol | | |
| CP | < 0,052 | < 0,054 |

(fortgesetzt)

| Lösung von Tebuconazol | | |
|---|---|---|
| PP | 0,102-0,153 | 0,095-0,152 |

Für die Bewertung eines Holzschutzmittels in der Praxis ist insbesondere der obere Wert nach Auswaschung maßgeblich. Die in Tabelle 4 dargestellten Ergebnisse belegen, dass die erfindungsgemäßen Wirkstoffzusammensetzungen eine zumindest vergleichbare, im Falle des Epoxiconazols sogar eine bessere Wirksamkeit gegen holzzerstörende Pilze zeigen als Formulierungen in organischen Lösungsmitteln.

Holzprüflinge, die zu Kontrollzwecken nur mit einer wirkstofffreien Dispersion bei ansonsten gleicher Zusammensetzung behandelt wurde, zeigten unter Testbedingungen starke Schädigungen der Holzsubstanz durch Pilzbefall, die nur geringfügig geringer waren als bei unbehandelten Holzprüflingen.

## Patentansprüche

1. Verfahren zum Schutz von Holz gegen den Befall mit Mikroorganismen, umfassend die Behandlung von Holz mit einer wässrigen Wirkstoffzusammensetzung, enthaltend

   a) wenigstens einen fungiziden organischen Wirkstoff mit einer Wasserlöslichkeit von nicht mehr als 5 g/l bei 25 °C/1013 mbar und
   b) ein feinteiliges Polymerisat mit einer mittleren Teilchengröße, bestimmt durch dynamische Lichtstreuung, von nicht mehr als 300 nm, worin die Polymerteilchen den Wirkstoff enthalten,

   wobei das Polymerisat aus ethylenisch ungesättigten Monomere M aufgebaut ist, umfassend:

   - wenigstens 60 Gew.%, bezogen auf die Gesamtmenge der Monomere M, wenigstens eines neutralen, monoethylenisch ungesättigten Monomeren M1 mit einer Wasserlöslichkeit von nicht mehr als 30 g/l bei 25 °C, die ausgewählt sind unter Styrol und Estern monoethylenisch ungesättigter Mono- und Dicarbonsäuren mit 3 bis 8 C-Atomen mit $C_1$-$C_{10}$-Alkanolen oder mit $C_5$-$C_8$-Cycloalkanolen, und
   - bis zu 40 Gew.-%, bezogen auf die Gesamtmenge der Monomere M, eines oder mehrerer, von den Monomeren M1 verschiedener ethylenisch ungesättigter Monomere M2;

   wobei das Polymerisat erhältlich ist durch radikalische wässrige Emulsionspolymerisation einer Öl-in-Wasser-Emulsion der Monomere M, wobei die Monomertröpfchen der zu polymerisierenden Öl-in-Wasser-Emulsion den fungiziden Wirkstoff in gelöster Form enthalten,
   wobei die Behandlung durch Tränken des Holzes mit der wässrigen Wirkstoffzusammensetzung oder einer wässrigen Verdünnung der wässrigen Wirkstoffzusammensetzung mit Hilfe von Druckunterschieden erfolgt.

2. Verfahren nach Anspruch 1, worin die Monomere M wenigstens ein Monomer M2 in einer Menge von 0,5 bis 40 Gew.-%, bezogen auf die Gesamtmenge der Monomere M, umfassen, das ausgewählt ist unter

   - monoethylenisch ungesättigten Monomeren M2a, die wenigstens eine Säuregruppe oder wenigstens eine anionische Gruppe aufweisen;
   - monoethylenisch ungesättigten, neutralen Monomeren M2b, die eine Wasserlöslichkeit von wenigstens 50 g/l bei 25 °C aufweisen; und
   - monoethylenisch ungesättigten Monomeren M2c, die wenigstens eine kationische Gruppe und/oder wenigstens eine im Wässrigen protonierbare Gruppe aufweisen.

3. Verfahren nach Anspruch 2, worin die Monomere M wenigstens ein Monomer M2c umfassen.

4. Verfahren nach Anspruch 3, wobei das Monomer M2c ausgewählt ist unter Monomeren der allgemeinen Formel I

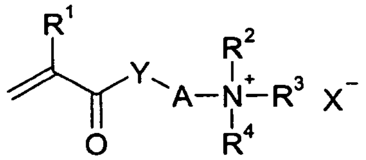

(I)

worin

$R^1$ Wasserstoff oder $C_1$-$C_4$-Alkyl,
$R^2$, $R^3$ unabhängig voneinander $C_1$-$C_4$-Alkyl, und
$R^4$ Wasserstoff oder $C_1$-$C_4$-Alkyl bedeuten,
Y für Sauerstoff, NH oder $NR^4$ mit $R^4$ = $C_1$-$C_4$-Alkyl steht,
A für $C_2$-$C_8$-Alkylen, das gegebenenfalls durch 1, 2 oder 3 nicht benachbarte Sauerstoffatome unterbrochen ist, steht und
$X^-$ für ein Anionenäquivalent steht,

und für $R^4$ = H den freien Basen der Monomere der Formel I.

**5.** Verfahren nach einem der vorhergehenden Ansprüche, worin die Monomere M1 ausgewählt sind unter Styrol, $C_2$-$C_{10}$-Alkylacrylaten und $C_1$-$C_{10}$-Alkylmethacrylaten.

**6.** Verfahren nach einem der vorhergehenden Ansprüche, wobei das Polymerisat eine Glasübergangstemperatur $T_G$ von wenigstens 10 °C aufweist.

**7.** Verfahren nach einem der vorhergehenden Ansprüche, enthaltend wenigstens einen fungiziden Wirkstoff in einer Menge von 0,1 bis 50 Gew.-%, bezogen auf das Gewicht der zur Herstellung des Polymerisats eingesetzten Monomere M.

**8.** Verfahren nach einem der vorhergehenden Ansprüche, worin der fungizide Wirkstoff ausgewählt ist unter Fungiziden aus der Gruppe der Conazole, der Gruppe der Morpholine, der Gruppe der Strobilurine, der Gruppe der Thiazole, der Gruppe der Sulfenamide und der Gruppe der Iodverbindungen.

**9.** Verfahren nach einem der vorhergehenden Ansprüche, worin die Polymerisateteilchen zusätzlich einen insektiziden Wirkstoff enthalten.

**10.** Verfahren nach Anspruch 9, worin der insektizide Wirkstoff ausgewählt ist unter Pyrethroiden, arthropoden Wachstumsregulatoren, Chlorfenapyr und Neonicotinoiden.

**11.** Verfahren nach einem der vorhergehenden Ansprüche, worin die Gesamtwirkstoffmenge 0,5 bis 50 Gew.-%, bezogen auf die Gesamtmenge der Monomere M, beträgt.

**12.** Verfahren nach einem der vorhergehenden Ansprüche mit einem Gehalt an flüchtigen organischen Bestandteilen von weniger als 1 Gew.-%, bezogen auf das Gesamtgewicht der Zusammensetzung.

**13.** Verfahren nach einem der vorhergehenden Ansprüche, wobei die Wirkstoffzusammensetzung einen Feststoffgehalt von 10 bis 60 Gew.% aufweist.

## Claims

**1.** Process for the protection of wood from infection by microorganisms comprising the treatment of wood with an aqueous active substance composition, comprising

a) at least one fungicidal organic active substance with a solubility in water of not more than 5 g/l at 25°C/1013 mbar, and
b) a finely-divided polymer with an average particle size, determined by dynamic light scattering, of not more than 300 nm, in which the polymer particles comprise the active substance,

the polymer being formed from ethylenically unsaturated monomers M comprising:

- at least 60% by weight, based on the total amount of the monomers M, of at least one neutral monoethylenically unsaturated monomer M1 with a solubility in water of not more than 30 g/l at 25°C which are selected from styrene and esters of monoethylenically unsaturated mono- and dicarboxylic acids with 3 to 8 carbon atoms with $C_1$-$C_{10}$-alkanols or with $C_5$-$C_8$-cycloalkanols, and
- up to 40% by weight, based on the total amount of the monomers M, of one or more ethylenically unsaturated monomers M2 other than the monomers M1;

it being possible for the polymer to be obtained by radical aqueous emulsion polymerization of an oil-in-water emulsion of the monomers M, the monomer droplets of the oil-in-water emulsion to be polymerized comprising the fungicidal active substance in dissolved form,
the treatment being carried out by impregnating the wood with the aqueous active substance composition or an aqueous dilution of the aqueous active substance composition with the help of pressure differences.

**2.** Process according to Claim 1, wherein the monomers M comprise at least one monomer M2 in an amount of 0.5 to 40% by weight, based on the total amount of the monomers M, which is selected from

- monoethylenically unsaturated monomers M2a exhibiting at least one acid group or at least one anionic group;
- monoethylenically unsaturated neutral monomers M2b exhibiting a solubility in water of at least 50 g/l at 25°C; and
- monoethylenically unsaturated monomers M2c exhibiting at least one cationic group and/or at least one group which can be protonated in the aqueous medium.

**3.** Process according to Claim 2, wherein the monomers M comprise at least one monomer M2c.

**4.** Process according to Claim 3, the monomer M2c being selected from monomers of the general formula I

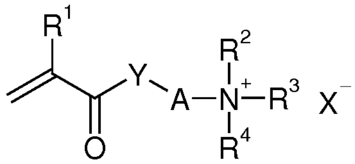

(I)

in which

$R^1$ is hydrogen or $C_1$-$C_4$-alkyl,
$R^2$ and $R^3$ are, independently of one another, $C_1$-$C_4$-alkyl, and
$R^4$ is hydrogen or $C_1$-$C_4$-alkyl,
Y is oxygen, NH or $NR^4$ with $R^4$ = $C_1$-$C_4$-alkyl,
A is $C_2$-$C_8$-alkylene, if appropriate interrupted by 1, 2 or 3 nonadjacent oxygen atoms, and
$X^-$ is an anion equivalent,

and, for $R^4$ = H, the free bases of the monomers of the formula I.

**5.** Process according to one of the preceding claims, wherein the monomers M1 are selected from styrene, $C_2$-$C_{10}$-alkyl acrylates and $C_1$-$C_{10}$-alkyl methacrylates.

**6.** Process according to one of the preceding claims, the polymer exhibiting a glass transition temperature $T_G$ of at least 10°C.

**7.** Process according to one of the preceding claims, comprising at least one fungicidal active substance in an amount of 0.1 to 50% by weight, based on the weight of the monomers M used for the preparation of the polymer.

**8.** Process according to one of the preceding claims, wherein the fungicidal active substance is selected from fungicides from the group of the conazoles, the group of the morpholines, the group of the strobilurins, the group of the thiazoles, the group of the sulfenamides and the group of the iodine compounds.

9. Process according to one of the preceding claims, wherein the polymer particles additionally comprise an insecticidal active substance.

10. Process according to Claim 9, wherein the insecticidal active substance is selected from pyrethroids, arthropod growth regulators, chlorfenapyr and neonicotinoids.

11. Process according to one of the preceding claims, wherein the total amount of active substance is 0.5 to 50% by weight, based on the total amount of the monomers M.

12. Process according to one of the preceding claims, with a content of volatile organic constituents of less than 1% by weight, based on the total weight of the composition.

13. Process according to one of the preceding claims, the active substance composition exhibiting a solids content of 10 to 60% by weight.

**Revendications**

1. Procédé pour la protection de bois contre l'attaque par des micro-organismes, comprenant le traitement de bois par une composition aqueuse de substance(s) active(s), contenant

a) au moins une substance active organique fongicide ayant une solubilité dans l'eau n'excédant pas 5 g/l à 25 °C/1013 mbars et
b) un polymérisat en fines particules ayant une taille moyenne de particule, déterminée par diffusion dynamique de la lumière, n'excédant pas 300 nm, les particules de polymère contenant la substance active,

le polymérisat étant constitué de monomères M à insaturation éthylénique, comprenant :

- au moins 60 % en poids, par rapport à la quantité totale des monomères M, d'au moins un de monomères M1 neutres, à insaturation éthylénique, ayant une solubilité dans l'eau n'excédant pas 30 g/l à 25 °C, qui sont choisis parmi le styrène et des esters d'acides mono- et dicarboxyliques à insaturation monoéthylénique ayant de 3 à 8 atomes de carbone avec des alcanols en $C_1$-$C_{10}$ ou avec des cycloalcanols en $C_5$-$C_8$, et
- jusqu'à 40 % en poids, par rapport à la quantité totale des monomères M, d'un ou de plusieurs monomères M2 à insaturation éthylénique, différents des monomères M1 ;

le polymérisat pouvant être obtenu par polymérisation radicalaire en émulsion aqueuse d'une émulsion huile-dans-eau des monomères M, les gouttelettes de monomères de l'émulsion huile-dans-eau à polymériser contenant la substance active fongicide sous forme dissoute,
le traitement s'effectuant par imprégnation du bois avec la composition aqueuse de substance(s) active(s) ou avec une dilution aqueuse de la composition aqueuse de substance(s) active(s) au moyen de différences de pression.

2. Procédé selon la revendication 1, dans lequel les monomères M comprennent au moins un monomère M2 en une quantité de 0,5 à 40 % en poids, par rapport à la quantité totale des monomères M, qui est choisi parmi

- des monomères M2a à insaturation monoéthylénique, qui comportent au moins un groupe acide ou au moins un groupe anionique ;
- des monomères M2b neutres à insaturation monoéthylénique, qui ont une solubilité dans l'eau d'au moins 50 g/l à 25 °C ; et
- des monomères M2c à insaturation monoéthylénique, qui comportent au moins un groupe cationique et/ou au moins un groupe protonable en milieu aqueux.

3. Procédé selon la revendication 2, dans lequel les monomères M comprennent au moins un monomère M2c.

4. Procédé selon la revendication 3, dans lequel le monomère M2c est choisi parmi des monomères de formule générale I

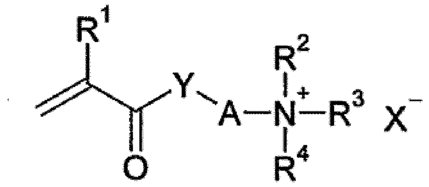

(I)

dans laquelle

$R^1$ représente un atome d'hydrogène ou un groupe alkyle en $C_1$-$C_4$ et
$R^2$, $R^3$ représentent indépendamment l'un de l'autre un groupe alkyle en $C_1$-$C_4$, et
$R^4$ représente un atome d'hydrogène ou un groupe alkyle en $C_1$-$C_4$,
Y représente un atome d'oxygène, NH ou $NR^4$, où $R^4$ = alkyle en $C_1$-$C_4$,
A représente un groupe alkylène en $C_2$-$C_8$, qui est éventuellement interrompu par 1, 2 ou 3 atomes d'oxygène non contigus, et
$X^-$ représente un équivalent d'un anion,

et pour $R^4$ = H, les bases libres des monomères de formule I.

**5.** Procédé selon l'une quelconque des revendications précédentes, dans lequel les monomères M1 sont choisis parmi le styrène, des acrylates d'alkyle en $C_2$-$C_{10}$ et des méthacrylates d'alkyle en $C_1$-$C_{10}$.

**6.** Procédé selon l'une quelconque des revendications précédentes, dans lequel le polymérisat présente une température de transition vitreuse $T_G$ d'au moins 10 °C.

**7.** Procédé selon l'une quelconque des revendications précédentes, contenant au moins une substance active fongicide en une quantité de 0,1 à 50 % en poids, par rapport au poids des monomères M utilisés pour la préparation du polymérisat.

**8.** Procédé selon l'une quelconque des revendications précédentes, dans lequel la substance active fongicide est choisie parmi des fongicides du groupe des conazoles, du groupe des morpholines, du groupe des strobilurines, du groupe des thiazoles, du groupe des sulfénamides et du groupe des composés iodés.

**9.** Procédé selon l'une quelconque des revendications précédentes, dans lequel les particules de polymérisat contiennent en plus une substance active insecticide.

**10.** Procédé selon la revendication 9, dans lequel la substance active insecticide est choisie parmi les pyréthroïdes, les régulateurs de croissance d'arthropodes, le chlorfénapyr et les néonicotinoïdes.

**11.** Procédé selon l'une quelconque des revendications précédentes, dans lequel la quantité totale de substance(s) active (s) vaut de 0,5 à 50 % en poids, par rapport à la quantité totale des monomères M.

**12.** Procédé selon l'une quelconque des revendications précédentes, ayant une teneur en composants organiques volatils de moins de 1 % en poids, par rapport au poids total de la composition.

**13.** Procédé selon l'une quelconque des revendications précédentes, la composition de substance(s) active(s) ayant une teneur en matière solide de 10 à 60 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005046328 A
- WO 02082900 A
- WO 0245507 A
- WO 9965301 A
- DE 4435423 A
- DE 4419518 A
- DE 4435422 A


### In der Beschreibung aufgeführte Nicht-Patentliteratur


- **E. H. POMMER.** Ullmann's Encyclopedia of Industrial Chemistry on CD Rom. Wiley VCH, 1997
- **Y. LIU ; P. LAKS ; P. HEIDEN.** *Journal of Applied Polymer Science,* 2002, vol. 86, 615-621
- **Y. LIU ; P. LAKS ; P. HEIDEN.** *Journal of Applied Polymer Science,* 2002, vol. 86, 608-614
- **Y. LIU ; P. LAKS ; P. HEIDEN.** *Journal of Applied Polymer Science,* 2002, vol. 86, 596-607
- **Y. LIU ; L. YAN ; P. HEIDEN ; P. LAKS.** *Journal of Applied Polymer Science,* 2001, vol. 79, 458-465
- **D.J. SHAW.** Introduction to Colloid and Surface Chemistry. Butterworths, 1986, 273
- **H. WIESE.** Wässrige Polymerdispersionen. Wiley-VCH, 1999, 40ff
- **H. AUWETER ; D. HORN.** *J. Colloid Interf. Sci.,* 1985, vol. 105, 399
- **D. LILGE ; D. HORN.** *Colloid Polym. Sci.,* 1991, vol. 269, 704
- **H. WIESE ; D. HORN.** *J. Chem. Phys.,* 1991, vol. 94, 6429
- Ullmann's Encyclopedia of Industrial Chemistry. VCH, 1992, vol. A 21, 169
- **ZOSEL.** Farbe und Lack. 1976, vol. 82, 125-134
- **T.G. FOX.** Bull. Am. Phys. Soc. (Ser. II). 1956, vol. 1, 123
- Ullmanns Enzyklopädie der technischen Chemie. 1980, 17-18
- Ullmanns's Encyclopedia of Industrial Chemistry. VCH, 1992, vol. A 21, 169
- **J. BRANDRUP ; E.H. IMMERGUT.** Polymer Handbook. J. Wiley, 1989
- Emulsions. **R. HEUSCH.** Ullmanns Encylopedia of Industrial Chemistry. Wiley-VCH, 1997
- Ullmann's Encyclopedia of Industrial Chemistry. Wiley VCH, 1997
- **A. F. BRAVERY.** *Intern. Res. Group Wood Pres., Doc. No. IRG/WP/2113, 5S.,* 1978